# EUROPEAN PATENT APPLICATION

(11) **EP 4 583 560 A1**
(43) Date of publication of application: **09.07.2025**
(21) Application number: 23867304.0
(22) Date of filing: 07.09.2023
(51) Int. Cl.: H04W 24/02

(54) **COMMUNICATION METHOD AND APPARATUS, STORAGE MEDIUM AND CHIP SYSTEM**

(30) Priority: 21.09.2022 CN 202211153747
(71) Applicant: Huawei Technologies Co., Ltd., Shenzhen, Guangdong 518129 (CN)
(72) Inventor: LIU, Qi, Shenzhen, Guangdong 518129 (CN); GAN, Yuqin, Shenzhen, Guangdong 518129 (CN)
(74) Representative: Maiwald GmbH
(86) International application number: PCT/CN2023/117495
(87) International publication number: WO 2024/061013

(57) **Abstract**

A communication method and apparatus, a storage medium, and a chip system are provided to reduce data transmission latency, and relate to the field of communication technologies. In this application, a network device sends first configuration information to a first terminal device, and sends second configuration information to a second terminal device. The first configuration information includes information about a time-frequency domain resource for sending uplink data by the first terminal device. The second configuration information includes information about a time-frequency domain resource for receiving downlink data by the second terminal device. The time-frequency domain resource for sending the uplink data by the first terminal device is the same as the time-frequency domain resource for receiving the downlink data by the second terminal device, and the uplink data sent by the first terminal device may be received by the second terminal device through an air interface. The second terminal device processes the received uplink data as downlink data, and obtains information from the uplink data. Data may be directly communicated between the first terminal device and the second terminal device through the air interface. Therefore, the data transmission latency is reduced.

## Description

### CROSS-REFERENCE TO RELATED APPLICATIONS

This application claims priority to Chinese Patent Application No. 202211153747.1, filed with the China National Intellectual Property Administration on September 21, 2022 and entitled "COMMUNICATION METHOD AND APPARATUS, STORAGE MEDIUM, AND CHIP SYSTEM", which is incorporated herein by reference in its entirety.

### TECHNICAL FIELD

Embodiments of this application relate to the field of communication technologies, and in particular, to a communication method and apparatus, a storage medium, and a chip system.

### BACKGROUND

When two terminal devices need to communicate with each other, for example, a terminal device A transmits data to a terminal device B, the terminal device A needs to send the data to a network device (for example, a base station) through a wireless air interface, then the data is arrived at a core network through a bearer network and is returned back to the network device through the bearer network, and the network device delivers the data to the terminal device B through the wireless air interface.

Ultra-reliable low-latency communication (Ultra-Reliable Low-Latency Communication, uRLLC) is one of three key application scenarios defined in 5G, and is mainly applied to latency-sensitive control information instruction transmission (for example, Internet-of-things communication). However, in the foregoing solution, the process of transmission between terminal devices involves a plurality of wireless nodes (the terminal device A, the network device, the bearer network, the core network, and the terminal device B), and if any problem occurs, some latency jitter may be introduced, resulting in great uncertainty. For latency-sensitive services, latency jitter affects data transmission efficiency, and even may cause device breakdown in severe cases. Currently, how to reduce data transmission latency becomes a problem to be urgently resolved.

### SUMMARY

This application provides a communication method and apparatus, a storage medium, and a chip system, to reduce data transmission latency.

According to **a first aspect,** an embodiment of this application provides a communication method. The method may be performed by a network device or a module, a unit, or a chip in the network device. In this application, an example in which this solution is executed by the network device is used for description. The method includes: The network device obtains first configuration information and second configuration information. The network device sends the first configuration information to a first terminal device, and sends the second configuration information to a second terminal device. The first configuration information includes information about a time-frequency domain resource for sending uplink data by the first terminal device, and the second configuration information includes information about a time-frequency domain resource for receiving downlink data by the second terminal device. The time-frequency domain resource for sending the uplink data by the first terminal device is the same as the time-frequency domain resource for receiving the downlink data by the second terminal device. Therefore, the uplink data sent by the first terminal device on the time-frequency domain resource for sending the uplink data by the first terminal device may be received by the second terminal device through an air interface. Then, the second terminal device may process the received uplink data as downlink data, and obtain information from the uplink data. This may also be understood as: Data (or referred to as the downlink data) received by the second terminal device on the time-frequency domain resource for receiving the downlink data includes the uplink data sent by the first terminal device.

The time-frequency domain resource for sending the uplink data by the first terminal device is the same as the time-frequency domain resource for receiving the downlink data by the second terminal device. Therefore, the uplink data sent by the first terminal device through the air interface may be directly received by the second terminal device through the air interface. In other words, the information in the uplink data arrives at the second terminal device not through processing and forwarding by the network device, and the uplink data sent by the first terminal device through the air interface may be directly received by the second terminal device through the air interface. To be specific, the second terminal device receives the uplink data instead of another data packet that carries the information in the uplink data. This can reduce data transmission latency. This may also be understood as: When receiving the data on the time-frequency domain resource for receiving the downlink data by the second terminal device, the second terminal device receives the uplink data from the first terminal device, and the second terminal device may consider the uplink data as downlink data from the network device, and perform processing through a downlink data processing procedure, to obtain the information in the uplink data.

In a possible implementation of the first aspect, the network device sends third configuration information to the first terminal device, and sends fourth configuration information to the second terminal device. The third configuration information is used by the first terminal device to send the uplink data, the fourth configuration information is used by the second terminal device to receive the downlink data, and the third configuration information matches the fourth configuration information. Therefore, after the uplink data sent by the first terminal device is received by the second terminal device through the air interface, the second terminal device may process the received uplink data as the downlink data, and obtain the information from the uplink data. This may also be understood as: The data (or referred to as the downlink data) received by the second terminal device on the time-frequency domain resource for receiving the downlink data includes the uplink data sent by the first terminal device.

Because the third configuration information matches the fourth configuration information, and the first terminal device sends the uplink data through the air interface based on the third configuration information, when receiving data through the air interface based on the fourth configuration information, the second terminal device may successfully receive the uplink data from the first terminal device. This may also be understood as: When receiving the data based on the fourth configuration information, the second terminal device receives the uplink data sent by the first terminal device through the air interface, and the second terminal device considers the uplink data as the downlink data from the network device, and performs processing based on the fourth configuration information (in other words, a process in which the second terminal device processes the uplink data is a reverse process of a process in which the first terminal device obtains the uplink data), to successfully obtain the information in the uplink data.

According to **a second aspect,** an embodiment of this application provides a communication method. The method may be performed by a network device or a module, a unit, or a chip in the network device. In this application, an example in which this solution is executed by the network device is used for description. The method includes: The network device obtains third configuration information and fourth configuration information. The network device sends the third configuration information to a first terminal device, and sends the fourth configuration information to a second terminal device. The third configuration information is used by the first terminal device to send uplink data, the fourth configuration information is used by the second terminal device to receive downlink data, and the third configuration information matches the fourth configuration information. Therefore, after the uplink data sent by the first terminal device is received by the second terminal device through an air interface, the second terminal device may process the received uplink data as downlink data, and obtain information from the uplink data. This may also be understood as: Data (or referred to as the downlink data) received by the second terminal device on a time-frequency domain resource for receiving the downlink data includes the uplink data sent by the first terminal device.

Because the third configuration information matches the fourth configuration information, and the first terminal device sends the uplink data through the air interface based on the third configuration information, when receiving data through the air interface based on the fourth configuration information, the second terminal device may successfully receive the uplink data from the first terminal device. This may also be understood as: When receiving the data based on the fourth configuration information, the second terminal device receives the uplink data sent by the first terminal device through the air interface, and the second terminal device considers the uplink data as downlink data from the network device, and performs processing based on the fourth configuration information (in other words, a process in which the second terminal device processes the uplink data is a reverse process of a process in which the first terminal device obtains the uplink data), to successfully obtain the information in the uplink data.

In a possible implementation of the second aspect, the network device sends first configuration information to the first terminal device, and sends second configuration information to the second terminal device. The first configuration information includes information about a time-frequency domain resource for sending the uplink data by the first terminal device, and the second configuration information includes information about the time-frequency domain resource for receiving the downlink data by the second terminal device. The time-frequency domain resource for sending the uplink data by the first terminal device is the same as the time-frequency domain resource for receiving the downlink data by the second terminal device.

The time-frequency domain resource for sending the uplink data by the first terminal device is the same as the time-frequency domain resource for receiving the downlink data by the second terminal device. Therefore, the uplink data sent by the first terminal device through the air interface may be directly received by the second terminal device through the air interface. In other words, the uplink data can directly arrive at the second terminal device without being processed by the network device. This may also be understood as: When receiving the data on the time-frequency domain resource for receiving the downlink data by the second terminal device, the second terminal device receives the uplink data from the first terminal device, and the second terminal device may consider the uplink data as the downlink data from the network device, and perform processing through a downlink data processing procedure, to obtain the information in the uplink data.

In a possible implementation of the first aspect or the second aspect, the third configuration information includes information indicating that a cell slot type of the first terminal device is flexible. In a possible implementation of the first aspect or the second aspect, the fourth configuration information includes information indicating that a cell slot type of the second terminal device is flexible.

It can be learned that, because the network device configures the cell slot types of the first terminal device and the second terminal device as "flexible (flexible)", the network device does not strictly limit whether a slot is an uplink slot or a downlink slot. Therefore, the network device may flexibly indicate (for example, by using downlink control information (downlink control information, DCI)) a slot to be used as a data sending slot (or referred to as an uplink data transmission slot) for the first terminal device (a sending-end device), and the slot is used as a data receiving slot (or referred to as a downlink data transmission slot) for the second terminal device (a receiving-end device). Then, the second terminal device may receive the uplink data from the first terminal device in the slot.

In a possible implementation of the first aspect or the second aspect, the first configuration information includes information for modulating and encoding the uplink data. In a possible implementation of the first aspect or the second aspect, the second configuration information includes information for demodulating and decoding the downlink data. The information for modulating and encoding the uplink data matches the information for demodulating and decoding the downlink data. In this way, the second terminal device may successfully demodulate and decode the uplink data obtained by the first terminal device through modulation and encoding processing, to obtain the information (or referred to as raw data) in the uplink data.

In a possible implementation of the first aspect or the second aspect, the information for modulating and encoding the uplink data includes information about a first modulation and coding scheme (modulation code scheme, MCS). In a possible implementation of the first aspect or the second aspect, the information for demodulating and decoding the downlink data includes information about a second MCS. The first MCS is the same as the second MCS. In this way, the second terminal device may demodulate and decode, by using the second MCS, the uplink data obtained by the first terminal device through modulation and encoding by using the first MCS, to obtain the information (or referred to as raw data) in the uplink data. In a possible implementation of the first aspect or the second aspect, the first configuration information is carried in first DCI. In a possible implementation of the first aspect or the second aspect, the second configuration information is carried in second DCI.

In a possible implementation of the first aspect or the second aspect, the third configuration information includes information indicating a first scrambling code sequence, and the first scrambling code sequence is for scrambling the uplink data. In a possible implementation of the first aspect or the second aspect, the fourth configuration information includes information indicating a second scrambling code sequence, and the second scrambling code sequence is for descrambling the downlink data. The first scrambling code sequence is the same as the second scrambling code sequence. Because the first terminal device scrambles the uplink data by using the first scrambling code sequence, and the first scrambling code sequence is the same as the second scrambling code sequence, the second terminal device may successfully descramble the uplink data by using the second scrambling code sequence.

In a possible implementation of the first aspect or the second aspect, the information indicating the first scrambling code sequence includes a user identifier that is of the first terminal device and that is for obtaining the first scrambling code sequence. In a possible implementation of the first aspect or the second aspect, the information indicating the second scrambling code sequence includes a user identifier that is of the second terminal device and that is for obtaining the second scrambling code sequence. The user identifier of the first terminal device is the same as the user identifier of the second terminal device. Because the user identifier of the first terminal device is the same as the user identifier of the second terminal device, the first scrambling code sequence obtained by the first terminal device may be the same as the second scrambling code sequence obtained by the second terminal device.

In a possible implementation of the first aspect or the second aspect, the information indicating the first scrambling code sequence includes a scrambling identifier for obtaining the first scrambling code sequence. In a possible implementation of the first aspect or the second aspect, the information indicating the second scrambling code sequence includes a scrambling identifier for obtaining the second scrambling code sequence. The scrambling identifier for obtaining the first scrambling code sequence is the same as the scrambling identifier for obtaining the second scrambling code sequence. Because the scrambling identifier for obtaining the first scrambling code sequence is the same as the scrambling identifier for obtaining the second scrambling code sequence, the first scrambling code sequence obtained by the first terminal device may be the same as the second scrambling code sequence obtained by the second terminal device.

In a possible implementation of the first aspect or the second aspect, pilot configuration information included in the third configuration information is the same as pilot configuration information in the fourth configuration information. The pilot configuration information included in the third configuration information is the same as the pilot configuration information in the fourth configuration information. Therefore, the second terminal device knows a pilot sequence sent by the first terminal device, and the second terminal device may successfully receive the pilot sequence. Then, the second terminal device may estimate, based on the pilot sequence, information about a channel through which the data passes during radio propagation, and may restore, based on the estimated information about the channel, the information (or referred to as the raw data) from the uplink data received from the terminal device.

In a possible implementation of the first aspect or the second aspect, the third configuration information further includes information about a carrier waveform for the uplink data. In a possible implementation of the first aspect or the second aspect, the fourth configuration information further includes information about a carrier waveform for the downlink data. The carrier waveform for the uplink data is the same as the carrier waveform for the downlink data. Because the carrier waveform for the uplink data sent by the first terminal device is the same as the carrier waveform for the downlink data received by the second terminal device, a success rate of correctly demodulating, by the second terminal device, the uplink data sent by the first terminal device can be improved.

In a possible implementation of the first aspect or the second aspect, the third configuration information further includes a quantity of codewords for sending the uplink data by the first terminal device in one slot. In a possible implementation of the first aspect or the second aspect, the fourth configuration information further includes a quantity of codewords for receiving the downlink data by the second terminal device in one slot. The quantity of codewords for sending the uplink data by the first terminal device in one slot is the same as the quantity of codewords for receiving the downlink data by the second terminal device in one slot. Because the quantity of codewords for sending the uplink data by the first terminal device in one slot is the same as the quantity of codewords for receiving the downlink data by the second terminal device in one slot, a success rate of correctly demodulating, by the second terminal device, the uplink data sent by the first terminal device can be improved.

In a possible implementation of the first aspect or the second aspect, the third configuration information includes information indicating a PDCP entity of the first terminal device not to perform header compression processing. In a possible implementation of the first aspect or the second aspect, the fourth configuration information includes information indicating a PDCP entity of the second terminal device not to perform header decompression processing. In this way, the first terminal device (the sending-end device) does not perform PDCP header compression on the obtained uplink data. This can reduce difficulty in processing the uplink data by the second terminal device (the receiving-end device), and improve a success rate of parsing the uplink data.

In a possible implementation of the first aspect or the second aspect, the third configuration information includes information indicating a PDCP entity of the first terminal device not to perform encryption processing. In a possible implementation of the first aspect or the second aspect, the fourth configuration information includes information indicating a PDCP entity of the second terminal device not to perform decryption processing. In this way, the first terminal device (the sending-end device) does not perform PDCP layer encryption on the obtained uplink data. This can reduce difficulty in processing the uplink data by the second terminal device (the receiving-end device), and improve a success rate of parsing the uplink data.

In a possible implementation of the first aspect or the second aspect, the third configuration information includes information indicating a PDCP entity of the first terminal device not to perform integrity protection processing. In a possible implementation of the first aspect or the second aspect, the fourth configuration information includes information indicating a PDCP entity of the second terminal device not to perform integrity confirmation processing. Alternatively, in this way, the first terminal device (the sending-end device) does not perform PDCP layer integrity protection on the obtained uplink data. This can reduce difficulty in processing the uplink data by the second terminal device (the receiving-end device), and improve a success rate of parsing the uplink data.

In a possible implementation of the first aspect or the second aspect, the third configuration information includes information indicating a MAC entity of the first terminal device not to include a MAC CE in a MAC protocol data unit (protocol data unit, PDU). This can reduce difficulty in processing the uplink data by the second terminal device (the receiving-end device), and improve a success rate of parsing the uplink data.

In a possible implementation of the first aspect or the second aspect, the third configuration information further includes information indicating an SDAP entity of the first terminal device not to configure an SDAP header. In a possible implementation of the first aspect or the second aspect, the fourth configuration information further includes information indicating an SDAP entity of the second terminal device not to process an SDAP header. In this way, the first terminal device (the sending-end device) does not include the SDAP header in the obtained uplink data. This can reduce difficulty in processing the uplink data by the second terminal device (the receiving-end device), and improve a success rate of parsing the uplink data.

In a possible implementation of the first aspect or the second aspect, the third configuration information further includes information indicating to configure an RLC entity of the first terminal device to be in an RLC UM mode. In a possible implementation of the first aspect or the second aspect, the fourth configuration information further includes information indicating to configure an RLC entity of the second terminal device to be in an RLC UM mode. In this way, the second terminal device (the receiving-end device) does not need to feed back a status report, so that complexity of this solution can be reduced.

In a possible implementation of the first aspect or the second aspect, the network device sends, to the first terminal device, information indicating a time domain resource for sending an uplink control indicator UCI by the first terminal device. The time domain resource for sending the UCI by the first terminal device is different from a time domain resource for the uplink data. In this embodiment of this application, the network device may control the time domain resource for sending the UCI by the first terminal device to be different from the time domain resource for the uplink data. To be specific, the network device may control the first terminal device not to send a UCI together with service data when sending the service data, so that the uplink data received by the second terminal device does not include the UCI. This can reduce complexity of processing the received uplink data by the second terminal device, and improve a success rate of decoding the received uplink data by the second terminal device.

In a possible implementation of the first aspect or the second aspect, the network device sends a first timing advance to the first terminal device. The first timing advance is used by the first terminal device to perform timing synchronization, and the first timing advance is determined based on a distance between the first terminal device and the second terminal device. In this way, a moment at which the data sent by the first terminal device arrives at the second terminal device through the air interface may fall within a time window for receiving a signal by the second terminal device, so that intersymbol interference of the signal received by the second terminal device can be reduced.

In a possible implementation of the first aspect or the second aspect, before the network device sends the first timing advance to the first terminal device, the network device sends a second timing advance to the first terminal device. The second timing advance is used by the first terminal device to perform timing synchronization, and the second timing advance is determined based on a distance between the first terminal device and the network device. In this way, the network device may first perform timing synchronization with the first terminal device, so that a moment at which information sent by the network device arrives at the first terminal device through the air interface may fall within a time window for receiving a signal by the first terminal device. This can reduce intersymbol interference of the signal received by the first terminal device.

In a possible implementation of the first aspect or the second aspect, the network device sends a third timing advance to the second terminal device. The third timing advance is used by the second terminal device to perform timing synchronization, and the third timing advance is determined based on a distance between the second terminal device and the network device. In this way, the network device may first perform timing synchronization with the second terminal device, so that a moment at which information sent by the network device arrives at the second terminal device through the air interface may fall within a time window for receiving a signal by the second terminal device. This can reduce intersymbol interference of the signal received by the second terminal device.

In a possible implementation of the first aspect or the second aspect, the network device sends, to the first terminal device, information indicating frequency domain and/or time domain for sending a PUCCH by the first terminal device. In a possible implementation of the first aspect or the second aspect, the network device sends, to the second terminal device, information indicating frequency domain and/or time domain for sending a PUCCH by the second terminal device. The frequency domain and/or the time domain for sending the PUCCH by the first terminal device do/does not overlap the frequency domain and/or the time domain for sending the PUCCH by the second terminal device. In this way, the network device respectively receives the PUCCH from the first terminal device and the PUCCH from the second terminal device on different frequency domain resources and/or different time domain resources, so that the network device does not confuse the PUCCH from the first terminal device with the PUCCH from the second terminal device.

In a possible implementation of the first aspect or the second aspect, the network device sends, to the first terminal device, information indicating frequency domain and/or time domain for receiving a PDCCH by the first terminal device. In a possible implementation of the first aspect or the second aspect, the network device sends, to the second terminal device, information indicating frequency domain and/or time domain for receiving a PDCCH by the second terminal device. The frequency domain and/or the time domain for receiving the PDCCH by the first terminal device do/does not overlap the frequency domain and/or the time domain for receiving the PDCCH by the second terminal device. In this way, the network device respectively sends the PDCCHs to the first terminal device and the second terminal device on different frequency domain resources and/or different time domain resources, so that the first terminal device and the second terminal device do not confuse the PDCCH sent by the network device to the first terminal device with the PDCCH sent by the network device to the second terminal device.

In a possible implementation of the first aspect or the second aspect, in a possible implementation of the first aspect or the second aspect, the network device receives the uplink data from the first terminal device. The network device processes the uplink data to obtain first information. The network device receives, from the second terminal device, information indicating that the first information is not successfully received. The network device processes the first information to obtain downlink data, and sends the downlink data to the second terminal device. Alternatively, the network device sends, to the first terminal device, information indicating the first terminal device to send the uplink data. It can be learned that if the second terminal device fails to correctly receive the first information sent by the first terminal device, but the network device correctly receives the first information sent by the first terminal device, the network device may schedule the first terminal device to resend the first information; or the network device may switch back to a "normal mode" for transmission between a terminal device and the network device, to be specific, the network device sends the first information (for example, carried in the downlink data) to the second terminal device, and the second terminal device obtains the first information from the downlink data received from the network device.

In a possible implementation of the first aspect or the second aspect, the network device may schedule a plurality of groups of terminal devices on a same time-frequency domain resource for communication. Each group of terminal devices may include two or three terminal devices for communication. For example, a group of terminal devices includes the first terminal device and one or more second terminal devices, and another group of terminal devices includes a third terminal device and a fourth terminal device.

For example, the network device sends fifth configuration information to the third terminal device, and sends sixth configuration information to the fourth terminal device. The fifth configuration information indicates a time-frequency domain resource for sending uplink data by the third terminal device, and the sixth configuration information indicates a time-frequency domain resource for receiving downlink data by the fourth terminal device. The time-frequency domain resource that is for sending the uplink data by the first terminal device and that is indicated by the first configuration information, the time-frequency domain resource that is for receiving the downlink data by the second terminal device and that is indicated by the second configuration information, the time-frequency domain resource that is for sending the uplink data by the third terminal device and that is indicated by the fifth configuration information, and the time-frequency domain resource that is for receiving the downlink data by the fourth terminal device and that is indicated by the sixth configuration information are the same. The time-frequency domain resource in embodiments of this application is a time domain resource and a frequency domain resource.

For differentiation, the scrambling code sequence for scrambling the uplink data sent by the first terminal device is different from a scrambling code sequence for scrambling the uplink data sent by the third terminal device. In this way, on a same time-frequency domain resource, data may be communicated between the first terminal device and the second terminal device, and data may also be communicated between the third terminal device and the fourth terminal device. Because the scrambling code sequence for scrambling the uplink data sent by the first terminal device is different from the scrambling code sequence for scrambling the uplink data sent by the third terminal device, even if the fourth terminal device receives the uplink data from the first terminal device, the fourth terminal device cannot correctly descramble the uplink data; and even if the second terminal device receives the uplink data from the third terminal device, the second terminal device cannot correctly descramble the uplink data. In this way, the network device may schedule a plurality of groups of terminal devices on the same time-frequency domain resource for communication, to improve resource utilization.

According to **a third aspect,** an embodiment of this application provides a communication method. The method may be performed by a first terminal device or a module, a unit, or a chip in the first terminal device. In this application, an example in which this solution is executed by the first terminal device is used for description. The method includes: The first terminal device receives first configuration information from a network device. The first configuration information includes information about a time-frequency domain resource for sending uplink data by the first terminal device. The time-frequency domain resource for sending the uplink data by the first terminal device is the same as a time-frequency domain resource for receiving downlink data by a second terminal device. Therefore, the uplink data sent by the first terminal device on the time-frequency domain resource for sending the uplink data by the first terminal device may be received by the second terminal device through an air interface. Then, the second terminal device may process the received uplink data as downlink data, and obtain information from the uplink data. This may also be understood as: Data (or referred to as the downlink data) received by the second terminal device on the time-frequency domain resource for receiving the downlink data includes the uplink data sent by the first terminal device.

The time-frequency domain resource for sending the uplink data by the first terminal device is the same as the time-frequency domain resource for receiving the downlink data by the second terminal device. Therefore, the uplink data sent by the first terminal device through the air interface may be received by the second terminal device. This may also be understood as: When receiving the data on the time-frequency domain resource for receiving the downlink data by the second terminal device, the second terminal device receives the uplink data from the first terminal device, and the second terminal device may consider the uplink data as downlink data from the network device, and perform processing through a downlink data processing procedure, to obtain the information in the uplink data.

In a possible implementation of the third aspect, the first terminal device receives, from the network device, third configuration information for sending the uplink data, where the third configuration information matches fourth configuration information used by the second terminal device to receive the downlink data. That the first terminal device sends the uplink data to the second terminal device on the time-frequency domain resource for sending the uplink data by the first terminal device includes: The first terminal device sends, based on the third configuration information, the uplink data to the second terminal device on the time-frequency domain resource for sending the uplink data by the first terminal device.

For related descriptions and beneficial effects, refer to related content in the possible implementations of the first aspect. Details are not described again.

According to **a fourth aspect,** an embodiment of this application provides a communication method. The method may be performed by a first terminal device or a module, a unit, or a chip in the first terminal device. In this application, an example in which this solution is executed by the first terminal device is used for description. The method includes: The first terminal device receives, from a network device, third configuration information for sending uplink data. The first terminal device sends the uplink data to a second terminal device based on the third configuration information, where the third configuration information matches fourth configuration information used by the second terminal device to receive downlink data. Therefore, after the uplink data sent by the first terminal device is received by the second terminal device through an air interface, the second terminal device may process the received uplink data as downlink data, and obtain information from the uplink data. This may also be understood as: Data (or referred to as the downlink data) received by the second terminal device on a time-frequency domain resource for receiving the downlink data includes the uplink data sent by the first terminal device.

Because the third configuration information matches the fourth configuration information, and the first terminal device sends the uplink data through the air interface based on the third configuration information, when receiving data through the air interface based on the fourth configuration information, the second terminal device may successfully receive the uplink data from the first terminal device. This may also be understood as: When receiving the data based on the fourth configuration information, the second terminal device receives the uplink data sent by the first terminal device through the air interface, and the second terminal device considers the uplink data as downlink data from the network device, and performs processing based on the fourth configuration information (in other words, a process in which the second terminal device processes the uplink data is a reverse process of a process in which the first terminal device obtains the uplink data), to successfully obtain the information in the uplink data.

In a possible implementation of the fourth aspect, the first terminal device receives first configuration information from the network device. The first configuration information includes information about a time-frequency domain resource for sending the uplink data by the first terminal device. The time-frequency domain resource for sending the uplink data by the first terminal device is the same as the time-frequency domain resource for receiving the downlink data by the second terminal device. That the first terminal device sends the uplink data to a second terminal device based on the third configuration information includes: The first terminal device sends, based on the third configuration information, the uplink data to the second terminal device on the time-frequency domain resource for sending the uplink data by the first terminal device. For related descriptions and beneficial effects, refer to related content in the possible implementations of the second aspect. Details are not described again.

In a possible implementation of the third aspect or the fourth aspect, the third configuration information includes information indicating that a cell slot type of the first terminal device is flexible. For related descriptions and beneficial effects, refer to related content in the possible implementations of the first aspect or the second aspect. Details are not described again.

In a possible implementation of the third aspect or the fourth aspect, the first configuration information is carried in first DCI. For related descriptions and beneficial effects, refer to related content in the possible implementations of the first aspect or the second aspect. Details are not described again.

In a possible implementation of the third aspect or the fourth aspect, the first configuration information includes information for modulating and encoding the uplink data. The information for modulating and encoding the uplink data matches information for demodulating and decoding the downlink data received by the second terminal device. For related descriptions and beneficial effects, refer to related content in the possible implementations of the first aspect or the second aspect. Details are not described again.

In a possible implementation of the third aspect or the fourth aspect, the information for modulating and encoding the uplink data includes information about a first modulation and coding scheme MCS. The information for demodulating and decoding the downlink data received by the second terminal device includes information about a second MCS. The first MCS is the same as the second MCS. For related descriptions and beneficial effects, refer to related content in the possible implementations of the first aspect or the second aspect. Details are not described again.

In a possible implementation of the third aspect or the fourth aspect, the third configuration information includes information indicating a first scrambling code sequence, and the first scrambling code sequence is for scrambling the uplink data. The first scrambling code sequence is the same as a second scrambling code sequence for descrambling the downlink data. For related descriptions and beneficial effects, refer to related content in the possible implementations of the first aspect or the second aspect. Details are not described again.

In a possible implementation of the third aspect or the fourth aspect, the information indicating the first scrambling code sequence includes a user identifier that is of the first terminal device and that is for obtaining the first scrambling code sequence. The user identifier of the first terminal device is the same as a user identifier that is of the second terminal device and that is for obtaining the second scrambling code sequence. For related descriptions and beneficial effects, refer to related content in the possible implementations of the first aspect or the second aspect. Details are not described again.

In a possible implementation of the third aspect or the fourth aspect, the information indicating the first scrambling code sequence includes a scrambling identifier for obtaining the first scrambling code sequence. The scrambling identifier for obtaining the first scrambling code sequence is the same as a scrambling identifier for obtaining the second scrambling code sequence. For related descriptions and beneficial effects, refer to related content in the possible implementations of the first aspect or the second aspect. Details are not described again.

In a possible implementation of the third aspect or the fourth aspect, pilot configuration information included in the third configuration information is the same as pilot configuration information configured by the network device for the second terminal device. For related descriptions and beneficial effects, refer to related content in the possible implementations of the first aspect or the second aspect. Details are not described again.

In a possible implementation of the third aspect or the fourth aspect, the third configuration information further includes information about a carrier waveform for the uplink data. The carrier waveform for the uplink data is the same as a carrier waveform for the downlink data. For related descriptions and beneficial effects, refer to related content in the possible implementations of the first aspect or the second aspect. Details are not described again.

In a possible implementation of the third aspect or the fourth aspect, the third configuration information further includes a quantity of codewords for sending the uplink data by the first terminal device in one slot. The quantity of codewords for sending the uplink data by the first terminal device in one slot is the same as a quantity of codewords for receiving the downlink data by the second terminal device in one slot. For related descriptions and beneficial effects, refer to related content in the possible implementations of the first aspect or the second aspect. Details are not described again.

In a possible implementation of the third aspect or the fourth aspect, the third configuration information includes information indicating a PDCP entity of the first terminal device not to perform header compression processing. The third configuration information may further include information indicating a PDCP entity of the first terminal device not to perform encryption processing. The third configuration information may further include information indicating a PDCP entity of the first terminal device not to perform integrity protection processing. The third configuration information may further include information indicating a MAC entity of the first terminal device not to include a MAC CE in a MAC PDU. For related descriptions and beneficial effects, refer to related content in the possible implementations of the first aspect or the second aspect. Details are not described again.

In a possible implementation of the third aspect or the fourth aspect, the third configuration information further includes information indicating an SDAP entity of the first terminal device not to configure an SDAP header. For related descriptions and beneficial effects, refer to related content in the possible implementations of the first aspect or the second aspect. Details are not described again.

In a possible implementation of the third aspect or the fourth aspect, the third configuration information further includes information indicating to configure an RLC entity of the first terminal device to be in an RLC UM mode. For related descriptions and beneficial effects, refer to related content in the possible implementations of the first aspect or the second aspect. Details are not described again.

In a possible implementation of the third aspect or the fourth aspect, the first terminal device receives, from the network device, information indicating a time domain resource for sending an uplink control indicator UCI by the first terminal device, where the time domain resource for sending the UCI by the first terminal device is different from a time domain resource for sending the uplink data. For related descriptions and beneficial effects, refer to related content in the possible implementations of the first aspect or the second aspect. Details are not described again.

In a possible implementation of the third aspect or the fourth aspect, the first terminal device receives a first timing advance from the network device, where the first timing advance is determined based on a distance between the first terminal device and the second terminal device. The first terminal device performs timing synchronization based on the first timing advance. For related descriptions and beneficial effects, refer to related content in the possible implementations of the first aspect or the second aspect. Details are not described again.

In a possible implementation of the third aspect or the fourth aspect, before the first terminal device receives the first timing advance from the network device, the first terminal device receives a second timing advance from the network device, where the second timing advance is determined based on a distance between the first terminal device and the network device. The first terminal device performs timing synchronization based on the second timing advance. For related descriptions and beneficial effects, refer to related content in the possible implementations of the first aspect or the second aspect. Details are not described again.

In a possible implementation of the third aspect or the fourth aspect, the first terminal device receives, from the network device, information indicating frequency domain and/or time domain for sending a PUCCH by the first terminal device, where the frequency domain and/or the time domain for sending the PUCCH by the first terminal device do/does not overlap frequency domain and/or time domain for sending a PUCCH by the second terminal device. For related descriptions and beneficial effects, refer to related content in the possible implementations of the first aspect or the second aspect. Details are not described again.

In a possible implementation of the third aspect or the fourth aspect, the first terminal device receives, from the network device, information indicating frequency domain and/or time domain for receiving a PDCCH by the first terminal device, where the frequency domain and/or the time domain for receiving the PDCCH by the first terminal device do/does not overlap frequency domain and/or time domain for receiving a PDCCH by the second terminal device. For related descriptions and beneficial effects, refer to related content in the possible implementations of the first aspect or the second aspect. Details are not described again.

According to **a fifth aspect,** an embodiment of this application provides a communication method. The method may be performed by a second terminal device or a module, a unit, or a chip in the second terminal device. In this application, an example in which this solution is executed by the second terminal device is used for description. The method includes: The second terminal device receives second configuration information from a network device, where the second configuration information includes information about a time-frequency domain resource for receiving downlink data by the second terminal device, and a time-frequency domain resource for sending uplink data by a first terminal device is the same as the time-frequency domain resource for receiving the downlink data by the second terminal device. Therefore, the uplink data sent by the first terminal device on the time-frequency domain resource for sending the uplink data by the first terminal device may be received by the second terminal device through an air interface. Then, the second terminal device may process the received uplink data as downlink data, and obtain information from the uplink data. This may also be understood as: Data (or referred to as the downlink data) received by the second terminal device on the time-frequency domain resource for receiving the downlink data includes the uplink data sent by the first terminal device.

The time-frequency domain resource for sending the uplink data by the first terminal device is the same as the time-frequency domain resource for receiving the downlink data by the second terminal device. Therefore, the uplink data sent by the first terminal device through the air interface may be received by the second terminal device. This may also be understood as: When receiving the data on the time-frequency domain resource for receiving the downlink data by the second terminal device, the second terminal device receives the uplink data from the first terminal device, and the second terminal device may consider the uplink data as downlink data from the network device, and perform processing through a downlink data processing procedure, to obtain the information in the uplink data.

In a possible implementation of the fifth aspect, the second terminal device receives, from the network device, fourth configuration information for receiving the downlink data, where the fourth configuration information matches third configuration information used by the first terminal device to send the uplink data. The second terminal device receives, based on the fourth configuration information, the uplink data from the first terminal device on the time-frequency domain resource for receiving the downlink data by the second terminal device.

For related descriptions and beneficial effects, refer to related content in the possible implementations of the first aspect. Details are not described again.

According to **a sixth aspect,** an embodiment of this application provides a communication method. The method may be performed by a second terminal device or a module, a unit, or a chip in the second terminal device. In this application, an example in which this solution is executed by the second terminal device is used for description. The method includes: The second terminal device receives, from a network device, fourth configuration information for receiving downlink data. The second terminal device receives uplink data from a first terminal device based on the fourth configuration information, where the fourth configuration information matches third configuration information used by the first terminal device to send the uplink data. Therefore, after the uplink data sent by the first terminal device is received by the second terminal device through an air interface, the second terminal device may process the received uplink data as downlink data, and obtain information from the uplink data. This may also be understood as: Data (or referred to as the downlink data) received by the second terminal device on a time-frequency domain resource for receiving the downlink data includes the uplink data sent by the first terminal device.

Because the third configuration information matches the fourth configuration information, and the first terminal device sends the uplink data through the air interface based on the third configuration information, when receiving data through the air interface based on the fourth configuration information, the second terminal device may successfully receive the uplink data from the first terminal device. This may also be understood as: When receiving the data based on the fourth configuration information, the second terminal device receives the uplink data sent by the first terminal device through the air interface, and the second terminal device considers the uplink data as downlink data from the network device, and performs processing based on the fourth configuration information (in other words, a process in which the second terminal device processes the uplink data is a reverse process of a process in which the first terminal device obtains the uplink data), to successfully obtain the information in the uplink data.

In a possible implementation of the sixth aspect, the second terminal device receives second configuration information from the network device, where the second configuration information includes information about the time-frequency domain resource for receiving the downlink data by the second terminal device, and a time-frequency domain resource for sending the uplink data by the first terminal device is the same as the time-frequency domain resource for receiving the downlink data by the second terminal device. The second terminal device receives, based on the fourth configuration information, the uplink data from the first terminal device on the time-frequency domain resource for receiving the downlink data by the second terminal device. For related descriptions and beneficial effects, refer to related content in the possible implementations of the second aspect. Details are not described again.

In a possible implementation of the fifth aspect or the sixth aspect, the fourth configuration information includes information indicating that a cell slot type of the second terminal device is flexible. For related descriptions and beneficial effects, refer to related content in the possible implementations of the first aspect or the second aspect. Details are not described again.

In a possible implementation of the fifth aspect or the sixth aspect, the second configuration information is carried in second DCI. For related descriptions and beneficial effects, refer to related content in the possible implementations of the first aspect or the second aspect. Details are not described again.

In a possible implementation of the fifth aspect or the sixth aspect, the second configuration information includes information for demodulating and decoding the downlink data. Information for modulating and encoding the uplink data sent by the first terminal device matches the information for demodulating and decoding the downlink data. For related descriptions and beneficial effects, refer to related content in the possible implementations of the first aspect or the second aspect. Details are not described again.

In a possible implementation of the fifth aspect or the sixth aspect, the information for modulating and encoding the uplink data sent by the first terminal device includes information about a first modulation and coding scheme MCS. The information for demodulating and decoding the downlink data includes information about a second MCS. The first MCS is the same as the second MCS. For related descriptions and beneficial effects, refer to related content in the possible implementations of the first aspect or the second aspect. Details are not described again.

In a possible implementation of the fifth aspect or the sixth aspect, the fourth configuration information includes information indicating a second scrambling code sequence, and the second scrambling code sequence is for descrambling the downlink data. A first scrambling code sequence for scrambling the uplink data is the same as the second scrambling code sequence. For related descriptions and beneficial effects, refer to related content in the possible implementations of the first aspect or the second aspect. Details are not described again.

In a possible implementation of the fifth aspect or the sixth aspect, the information indicating the second scrambling code sequence includes a user identifier that is of the second terminal device and that is for obtaining the second scrambling code sequence. A user identifier that is of the first terminal device and that is for obtaining the first scrambling code sequence is the same as the user identifier of the second terminal device. For related descriptions and beneficial effects, refer to related content in the possible implementations of the first aspect or the second aspect. Details are not described again.

In a possible implementation of the fifth aspect or the sixth aspect, the information indicating the second scrambling code sequence includes a scrambling identifier for obtaining the second scrambling code sequence. A scrambling identifier for obtaining the first scrambling code sequence is the same as the scrambling identifier for obtaining the second scrambling code sequence. For related descriptions and beneficial effects, refer to related content in the possible implementations of the first aspect or the second aspect. Details are not described again.

In a possible implementation of the fifth aspect or the sixth aspect, pilot configuration information in the fourth configuration information is the same as pilot configuration information configured by the network device for the first terminal device. For related descriptions and beneficial effects, refer to related content in the possible implementations of the first aspect or the second aspect. Details are not described again.

In a possible implementation of the fifth aspect or the sixth aspect, the fourth configuration information further includes information about a carrier waveform for the downlink data. A carrier waveform for the uplink data is the same as the carrier waveform for the downlink data. For related descriptions and beneficial effects, refer to related content in the possible implementations of the first aspect or the second aspect. Details are not described again.

In a possible implementation of the fifth aspect or the sixth aspect, the fourth configuration information further includes a quantity of codewords for receiving the downlink data by the second terminal device in one slot. A quantity of codewords for sending the uplink data by the first terminal device in one slot is the same as the quantity of codewords for receiving the downlink data by the second terminal device in one slot. For related descriptions and beneficial effects, refer to related content in the possible implementations of the first aspect or the second aspect. Details are not described again.

In a possible implementation of the fifth aspect or the sixth aspect, the fourth configuration information further includes information indicating an SDAP entity of the second terminal device not to process an SDAP header. For related descriptions and beneficial effects, refer to related content in the possible implementations of the first aspect or the second aspect. Details are not described again.

In a possible implementation of the fifth aspect or the sixth aspect, the fourth configuration information further includes information indicating to configure an RLC entity of the second terminal device to be in an RLC UM mode. For related descriptions and beneficial effects, refer to related content in the possible implementations of the first aspect or the second aspect. Details are not described again.

In a possible implementation of the fifth aspect or the sixth aspect, the second terminal device receives a third timing advance from the network device, where the third timing advance is determined based on a distance between the second terminal device and the network device. The second terminal device performs timing synchronization based on the third timing advance. For related descriptions and beneficial effects, refer to related content in the possible implementations of the first aspect or the second aspect. Details are not described again.

In a possible implementation of the fifth aspect or the sixth aspect, the second terminal device receives, from the network device, information indicating frequency domain and/or time domain for sending a PUCCH by the second terminal device, where frequency domain and/or time domain for sending a PUCCH by the first terminal device do/does not overlap the frequency domain and/or the time domain for sending the PUCCH by the second terminal device. For related descriptions and beneficial effects, refer to related content in the possible implementations of the first aspect or the second aspect. Details are not described again.

In a possible implementation of the fifth aspect or the sixth aspect, the second terminal device receives, from the network device, information indicating frequency domain and/or time domain for receiving a PDCCH by the second terminal device, where frequency domain and/or time domain for receiving a PDCCH by the first terminal device do/does not overlap the frequency domain and/or the time domain for receiving the PDCCH by the second terminal device. For related descriptions and beneficial effects, refer to related content in the possible implementations of the first aspect or the second aspect. Details are not described again.

For ease of description, the information in the uplink data is referred to as the first information in this application. In a possible implementation of the fifth aspect or the sixth aspect, after the second terminal device receives the uplink data from the first terminal device based on the fourth configuration information, the second terminal device processes the uplink data based on the fourth configuration information. When not successfully obtaining the first information in the uplink data, the second terminal device sends, to the network device, information indicating that the first information is not successfully received.

For related descriptions and beneficial effects, refer to related content in the possible implementations of the first aspect or the second aspect. Details are not described again.

In a possible implementation of the fifth aspect or the sixth aspect, after the second terminal device receives the uplink data from the first terminal device based on the fourth configuration information, the second terminal device processes the uplink data based on the fourth configuration information to obtain the first information. When successfully obtaining the first information in the uplink data, the second terminal device sends, to the network device, information indicating that the first information is successfully received. For related descriptions and beneficial effects, refer to related content in the possible implementations of the first aspect or the second aspect. Details are not described again.

According to **a seventh aspect,** a communication apparatus is provided. The communication apparatus may be the network device, the first terminal device, or the second terminal device above. The communication apparatus may include a communication unit and a processing unit, to perform any one of the first aspect to the sixth aspect or the possible implementations of the first aspect to the sixth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit is a transmitter machine and a receiver machine.

Optionally, the communication apparatus further includes modules that may be configured to perform any one of the first aspect to the sixth aspect or the possible implementations of the first aspect to the sixth aspect.

According to **an eighth aspect,** a communication apparatus is provided. The communication apparatus may be the network device, the first terminal device, or the second terminal device above. The communication apparatus may include a processor and a memory, to perform any one of the first aspect to the sixth aspect or the possible implementations of the first aspect to the sixth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the sixth aspect or the possible implementations of the first aspect to the sixth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to **a ninth aspect,** a communication apparatus is provided. The communication apparatus may be the network device, the first terminal device, or the second terminal device above. The communication apparatus may include a processor, to perform any one of the first aspect to the sixth aspect or the possible implementations of the first aspect to the sixth aspect. The processor is coupled to a memory. Optionally, the communication apparatus further includes the memory. Optionally, the communication apparatus further includes a communication interface, and the processor is coupled to the communication interface.

In an implementation, when the communication apparatus is the network device, the first terminal device, or the second terminal device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to **a tenth aspect,** a system is provided. The system includes one or more of the foregoing network devices.

In a possible implementation, the system may further include one or more terminal devices, for example, the first terminal device and/or the second terminal device above.

According to **an eleventh aspect,** a computer program product is provided. The computer program product includes a computer program (which may also be referred to as code or instructions). When the computer program is run, a computer is enabled to perform any one of the first aspect to the sixth aspect or the possible implementations of the first aspect to the sixth aspect.

According to **a twelfth aspect,** a computer-readable storage medium is provided. The computer-readable medium stores a computer program (which may also be referred to as code or instructions). When the computer program is run on a computer, the computer is enabled to perform any one of the first aspect to the sixth aspect or the possible implementations of the first aspect to the sixth aspect.

According to **a thirteenth aspect,** a chip system is provided. The chip system may include a processor. The processor is coupled to a memory, and may be configured to perform any one of the first aspect to the sixth aspect or the possible implementations of the first aspect to the sixth aspect. Optionally, the chip system further includes the memory. The memory is configured to store a computer program (which may also be referred to as code or instructions). The processor is configured to invoke the computer program from the memory and run the computer program, to enable a device in which the chip system is installed to perform any one of the first aspect to the sixth aspect or the possible implementations of the first aspect to the sixth aspect.

According to **a fourteenth aspect,** a processing apparatus is provided, including an interface circuit and a processing circuit. The interface circuit may include an input circuit and an output circuit. The processing circuit is configured to: receive a signal by using the input circuit, and transmit a signal by using the output circuit, to implement any one of the first aspect to the sixth aspect or the possible implementations of the first aspect to the sixth aspect.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example but not limited to, a receiver, a signal output by the output circuit may be output to, for example but not limited to, a transmitter and transmitted by the transmitter, and the input circuit and the output circuit may be a same circuit, where the circuit is separately used as the input circuit and the output circuit at different moments. Specific implementations of the processor and various circuits are not limited in this application.

In an implementation, when the communication apparatus is a network device, a first terminal device, or a second terminal device, the interface circuit may be a radio frequency processing chip in the network device, the first terminal device, or the second terminal device, and the processing circuit may be a baseband processing chip in the network device, the first terminal device, or the second terminal device.

In another implementation, the communication apparatus may be a part of components, for example, a system chip, a communication chip, or another integrated circuit product, in a network device, a first terminal device, or a second terminal device. The interface circuit may be an input/output interface, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2A is a diagram of an architecture of another communication system to which an embodiment of this application is applicable;
FIG. 2B is a diagram of a scenario to which an embodiment of this application is applicable;
FIG. 3 is a possible schematic flowchart of a communication method according to an embodiment of this application;
FIG. 4 is a diagram of a communication method according to an embodiment of this application;
FIG. 5 is a possible schematic flowchart of a communication method according to an embodiment of this application;
FIG. 6 is a possible diagram of a structure of a protocol stack in a 5G communication system according to an embodiment of this application;
FIG. 7 is a possible schematic flowchart of a communication method according to an embodiment of this application;
FIG. 8 is a diagram of an architecture of a communication system to which an embodiment of this application is applicable;
FIG. 9 is a possible diagram of transmitting uplink data by a first terminal device according to an embodiment of this application;
FIG. 10 is a diagram of a structure of a possible communication apparatus according to an embodiment of this application;
FIG. 11 is a diagram of a structure of another possible communication apparatus according to an embodiment of this application; and
FIG. 12 is a diagram of a structure of another possible communication apparatus according to an embodiment of this application.

### DESCRIPTION OF EMBODIMENTS

Technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or may be applied to a future communication system or another similar communication system.

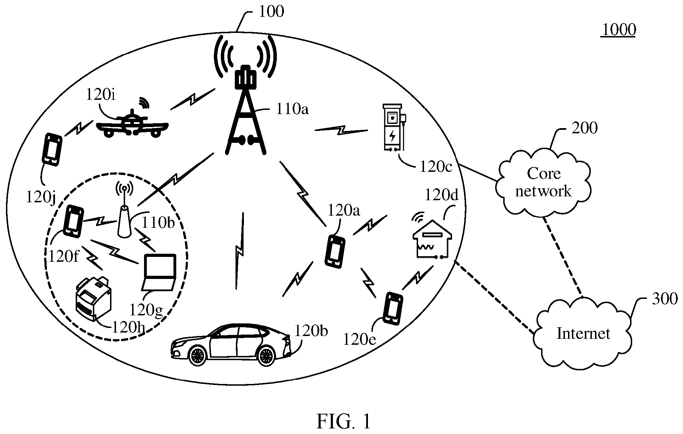

The solutions provided in embodiments of this application may be applied to a communication system 1000 shown in FIG. 1. As shown in FIG. 1, the communication system 1000 includes a radio access network 100 and a core network 200. Both the radio access network 100 and the core network 200 may be connected to the Internet 300. The radio access network 100 may include at least one access network device (for example, 110a and 110b in FIG. 1 that are collectively referred to as 110), and may further include at least one terminal (for example, a terminal 120a, a terminal 120b, a terminal 120c, a terminal 120d, a terminal 120e, a terminal 120f, a terminal 120g, a terminal 120h, a terminal 120i, and a terminal 120j in FIG. 1 that are collectively referred to as terminals 120). The terminal 120a to the terminal 120j are connected to the access network device 110a and the access network device 110b in a wireless manner. The access network device 110a and the access network device 110b are connected to the core network 200 in a wireless or wired manner. A core network device in the core network and the access network device in the radio access network may be different physical devices, or may be a same physical device that integrates a logical function of the core network and a logical function of the radio access network. The terminals may be connected to each other in a wireless manner. The access network devices may be connected to each other in a wired or wireless manner. FIG. 1 is merely a diagram. The communication system may further include another network device, for example, a wireless relay device and/or a wireless backhaul device (not shown in FIG. 1).

For example, the communication system 1000 may support a 3rd generation partnership project (3rd generation partnership project, 3GPP)-related cellular system (for example, a 5G communication system, a communication system integrating a plurality of wireless technologies (for example, a communication system integrating at least two technologies in 2G, 3G, 4G, or 5G), or a future-oriented evolved system (for example, using a 6G access technology)), a wireless fidelity (wireless fidelity, Wi-Fi) system, a communication system integrating the 3GPP-related cellular system and another technology, or a future communication system.

The access network device in embodiments of this application is sometimes also referred to as an access node. The access network device has a wireless transceiver function, and is configured to communicate with a terminal. The access network device includes but is not limited to a base station (base station), an evolved NodeB (evolved NodeB, eNodeB), or a transmission reception point (transmission reception point, TRP) in the foregoing communication systems, a next generation NodeB (next generation NodeB, gNB) in a 5G mobile communication system, a next generation base station in a 6th generation (6th generation, 6G) mobile communication system, an access network device in an open radio access network ORAN (open RAN, ORAN) system or a module of the access network device, a base station in a future mobile communication system, an access node in a Wi-Fi system, or the like. Alternatively, the access network device may be a module or unit that can implement a part of functions of the base station. For example, the access network device may be a central unit (central unit, CU), a distributed unit (distributed unit, DU), a CU-control plane (control plane, CP), a CU-user plane (user plane, UP), or a radio unit (radio unit, RU) described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station (for example, 110a in FIG. 1), a micro base station or an indoor station (for example, 110b in FIG. 1), a relay node, a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle-to-everything (vehicle-to-everything, V2X) technology may be a road side unit (road side unit, RSU). A plurality of access network devices in the communication system may be base stations of a same type, or may be base stations of different types. The base station may communicate with the terminal, or may communicate with the terminal through a relay station. The terminal may communicate with a plurality of base stations of different access technologies.

The terminal may also be referred to as a terminal device, a user equipment (user equipment, UE), a mobile station, a mobile terminal, or the like. The terminal may be widely used in various communication scenarios, for example, device-to-device (device-to-device, D2D) communication, vehicle-to-everything (vehicle-to-everything, V2X) communication, machine type communication (machine type communication, MTC), an Internet of things (Internet of things, IOT), virtual reality, augmented reality, industrial control, self-driving, telemedicine, a smart grid, smart furniture, smart office, smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The access network device and/or the terminal may be fixed or movable. The access network device and/or the terminal may be deployed on land, including an indoor or outdoor device, or a handheld or vehicle-mounted device; may be deployed on water; or may be deployed on an airplane, a balloon, and an artificial satellite in air. Application scenarios of the access network device and the terminal are not limited in embodiments of this application. The access network device and the terminal device may be deployed in a same scenario or different scenarios. For example, the access network device and the terminal device are both deployed on land; or the access network device is deployed on land, and the terminal device is deployed on water. Examples are not enumerated one by one.

In embodiments of this application, each element in the communication system may be considered as a network element in the communication system. For example, a helicopter or an uncrewed aerial vehicle (the terminal 120i) in FIG. 1 may be configured as a mobile access network device. For the terminal device 120j that accesses the radio access network 100 through the terminal 120i, the terminal 120i is an access network device. However, for the access network device 110a, the terminal 120i is a terminal device, in other words, the access network device 110a communicates with the terminal 120i by using a wireless air interface protocol. The access network device 110a may alternatively communicate with the terminal 120i by using an interface protocol between access network devices. In this case, for the access network device 110a, the terminal 120i is also an access network device. Therefore, both the access network device and the terminal device may be collectively referred to as communication apparatuses. The access network device 110a and the access network device 110b in FIG. 1 may be referred to as communication apparatuses having a function of the access network device. The terminal 120a to the terminal 120j in FIG. 1 may be referred to as communication apparatuses having a function of the terminal device.

In embodiments of this application, the communication apparatus having the function of the access network device may be an access network device, a module (for example, a chip, a chip system, or a software module) in the access network device, or a control subsystem including the function of the access network device. For example, the control subsystem including the function of the access network device may be a control center in scenarios, such as a smart grid, industrial control, smart transportation, or a smart city, in which the terminal may be used.

In embodiments of this application, the communication apparatus having the function of the terminal may be a terminal, a module (for example, a chip, a chip system, a modem, or a software model) in the terminal, or an apparatus including the function of the terminal. In embodiments of this application, for ease of description, a base station or a BS and a terminal or a UE are used as an example for description below.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane protocol layer structure may include at least one of the following: a service data adaptation protocol (service data adaptation protocol, SDAP) layer, a PDCP layer, an RLC layer, a MAC layer, or a physical layer.

The access network device may include a central unit (central unit, CU) and a distributed unit (distributed unit, DU). This design may be referred to as CU/DU split. A plurality of DUs may be centrally controlled by one CU. For example, an interface between the CU and the DU is referred to as an F1 interface. A control plane (control plane, CP) interface may be F1-C, and a user plane (user plane, UP) interface may be F1-U. A specific name of each interface is not limited in embodiments of this application. The CU and the DU may be divided based on protocol layers of a wireless network. For example, functions of the PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above the PDCP layer are set on the CU, and functions of the PDCP layer and protocol layers below the PDCP layer are set on the DU. This is not limited.

The division into processing functions of the CU and the DU based on the protocol layers is merely an example, and division may alternatively be performed in another manner. For example, the CU or the DU may be divided to have functions of more protocol layers. For another example, the CU or the DU is divided to have a part of processing functions of protocol layers. For example, a part of functions of the RLC layer and functions of protocol layers above the RLC layer are set on the CU, and a remaining part of functions of the RLC layer and functions of protocol layers below the RLC layer are set on the DU. For still another example, the functions of the CU or the DU may alternatively be obtained through division based on a service type or another system requirement. For example, the division may be performed based on latency. A function whose processing time needs to satisfy a latency requirement is set on the DU, and a function whose processing time does not need to satisfy the latency requirement is set on the CU.

Optionally, the CU may have one or more functions of a core network.

Optionally, a radio unit (radio unit, RU) of the DU may be disposed remotely. The RU has a radio frequency function. For example, the DU and the RU may be divided at the PHY layer. For example, the DU may implement a higher-layer function of the PHY layer, and the RU may implement a lower-layer function of the PHY layer. For sending, a function of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or radio frequency sending. For receiving, a function of the PHY layer may include at least one of the following: CRC check, channel decoding, rate de-matching, descrambling, demodulation, layer de-mapping, channel detection, resource de-mapping, physical antenna de-mapping, or radio frequency receiving. Higher-layer functions of the PHY layer may include a part of functions of the PHY layer. The part of functions are closer to the MAC layer. Lower-layer functions of the PHY layer may include the other part of functions of the PHY layer. For example, the other part of functions are closer to the radio frequency function. For example, the higher-layer functions of the PHY layer may include the CRC bit addition, the channel coding, the rate matching, the scrambling, the modulation, and the layer mapping; and the lower-layer functions of the PHY layer may include the precoding, the resource mapping, the physical antenna mapping, and the radio frequency sending. Alternatively, the higher-layer functions of the PHY layer may include the CRC bit addition, the channel coding, the rate matching, the scrambling, the modulation, the layer mapping, and the precoding; and the lower-layer functions of the PHY layer may include the resource mapping, the physical antenna mapping, and the radio frequency sending. For example, the higher-layer functions of the PHY layer may include the CRC check, the channel decoding, the rate de-matching, the decoding, the demodulation, and the layer de-mapping; and the lower-layer functions of the PHY layer may include the channel detection, the resource de-mapping, the physical antenna de-mapping, and the radio frequency receiving. Alternatively, the higher-layer functions of the PHY layer may include the CRC check, the channel decoding, the rate de-matching, the decoding, the demodulation, the layer de-mapping, and the channel detection; and the lower-layer functions of the PHY layer may include the resource de-mapping, the physical antenna de-mapping, and the radio frequency receiving.

Optionally, the functions of the CU may be further divided, and a control plane and a user plane are split and implemented by different entities. Split entities are a control plane CU entity (namely, a CU-CP entity) and a user plane CU entity (namely, a CU-UP entity). The CU-CP entity and the CU-UP entity may be separately connected to the DU. In embodiments of this application, an entity may be understood as a module or a unit, and may exist in a form of a hardware structure, a software module, or a combination of a hardware structure and a software module. This is not limited.

Optionally, any one of the CU, the CU-CP, the CU-UP, the DU, and the RU may be a software module, a hardware structure, or a combination of a software module and a hardware structure. This is not limited. Different entities may exist in a same form or different forms. For example, the CU, the CU-CP, the CU-UP, and the DU are software modules, and the RU is a hardware structure. For brevity of description, all possible combination forms are not enumerated herein. These modules and methods performed by these modules also fall within the protection scope of embodiments of this application. For example, when the method in embodiments of this application is performed by the access network device, the method may be specifically performed by at least one of the CU, the CU-CP, the CU-UP, or the DU.

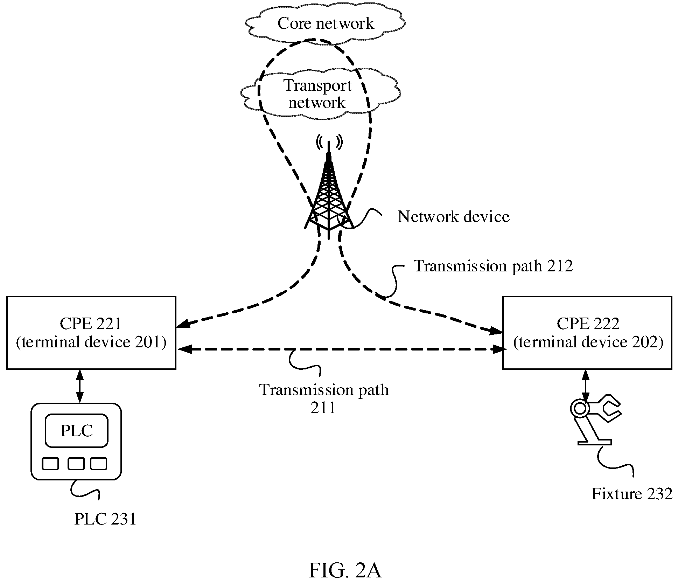

Based on the system architecture shown in FIG. 1, FIG. 2A is an example of a diagram of an architecture of another communication system to which an embodiment of this application is applicable. As shown in FIG. 2A, the communication system includes a network device and a terminal device. As shown in FIG. 2A, the communication system further includes a transport network and a core network. A network element of the core network may include, for example, a user plane function (user plane function, UPF) network element.

FIG. 2A shows examples of a terminal device 201 and a terminal device 202 included in the system architecture in embodiments of this application. In FIG. 2A, an example in which the terminal device 201 is a customer-premises equipment (customer-premises equipment, CPE) 221 and the terminal device 122 is a CPE 222 is used for illustration. In embodiments of this application, the terminal device may be connected to another device, for example, a programmable logic controller (programmable logic controller, PLC) or an industrial input/output (Input/Output, I/O) device. The industrial I/O device may include, for example, a fixture or a robotic arm. The CPE 221 shown in FIG. 2A is connected to a programmable logic controller (programmable logic controller, PLC) 231, and the CPE 222 is connected to a fixture 232.

In embodiments of this application, data may be communicated between terminal devices (for example, between the CPE 221 and the CPE 222). Information (or referred to as raw data) in the data may come from a device (for example, the PLC or the industrial I/O device) connected to the terminal device (for example, the CPE). With reference to FIG. 2A, for example, the CPE 221 may obtain raw data from the PLC 231 connected to the CPE 221, then process the raw data to obtain data, and send the data (for example, through a wireless air interface). After receiving the data (for example, through the wireless air interface), the CPE 222 may process the received data to obtain information included in the data, and then send the information to the fixture 232 connected to the CPE 222, so that the fixture 232 performs a corresponding action based on the information.

As shown in FIG. 2A, in the solution provided in embodiments of this application, there are two transmission paths, for example, a transmission path 211 and a transmission path 212 shown in FIG. 2A, between the terminal devices (for example, between the CPE 221 and the CPE 222).

The transmission path 211 is a path in which the terminal device 201 directly performs transmission with the terminal device 202 through the air interface (the air interface in embodiments of this application may also be referred to as a wireless air interface), and may not pass through a network device or another device. In this case, data A1 sent by the terminal device 201 directly arrives at the terminal device 202, in other words, data received by the terminal device 202 is the data A1 sent by the terminal device 201.

The transmission path 212 is a path in which the terminal device 201 performs transmission with the terminal device 202 through the network device, the transport network, and the core network. For example, the terminal device 201 sends data to the network device through the air interface. After the data is sequentially processed by the network device, the transport network, and the core network, the core network sends the data to the network device through the transport network, and then the data arrives at the terminal device 202 through the network device. In the transmission path 212, the terminal device 202 receives data A2 from the network device. The data A2 is obtained by the network device by performing reverse processing on the data A1 after the network device receives the data A1 from the terminal device 201 and further encapsulating information in the data A1.

It should be understood that there may be a plurality of network devices in the communication system, and each of the network devices may provide a service for a plurality of terminal devices. A quantity of network devices and a quantity of terminal devices in the communication system are not limited in embodiments of this application. The network device and each of a part or all of the plurality of terminal devices in FIG. 2A may implement the technical solutions provided in embodiments of this application. In FIG. 2A, an example in which the terminal device is the CPE is used for illustration. The terminal device may use data from the device connected to the CPE as raw data. When the terminal device is another device, the terminal device may use data from the another device as raw data, or the terminal device itself may generate raw data.

FIG. 2A is described by using the example in which the terminal device is the CPE. It should be understood that the terminal device in embodiments of this application is not limited thereto. The terminal device may alternatively be a mobile phone, a vehicle, a vehicle-mounted device, a vehicle-mounted module, a road side unit, a pedestrian handheld device, or a massive machine-type communications (massive machine-type communications, mMTC) terminal device, for example, a smart water meter or an electricity meter, in the Internet of things. The network device in this application may include the access network device and/or a core network device. For related descriptions of the terminal device and the network device, refer to the related descriptions in FIG. 1. Details are not described again.

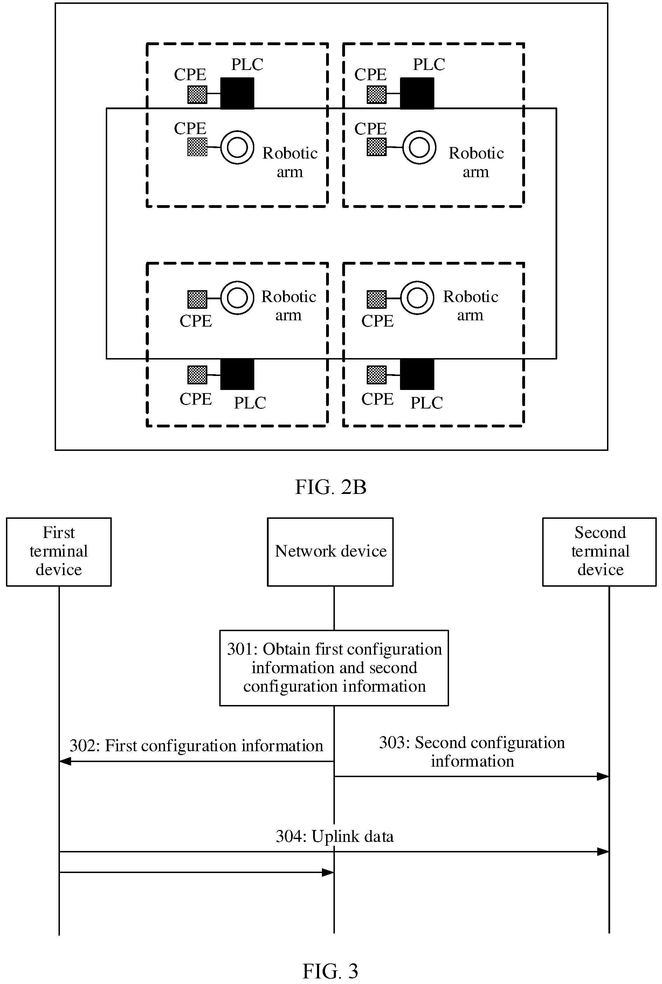

The solutions provided in embodiments of this application may be applied to a scenario in which terminal devices communicate with each other in industrial control. Based on the content shown in FIG. 2A, FIG. 2B is an example of a diagram of a scenario to which an embodiment of this application is applicable. FIG. 2B uses an example in which the scenario to which embodiments of this application is applicable is a typical operation island layout for illustration. In this scenario, service data communicated between terminal devices is fixed, and is mainly industrial control instructions communicated between devices in an operation island. In this scenario, a location of each terminal device is fixed, and the terminal device does not move in a large range.

As shown in FIG. 2B, the scenario includes a plurality of PLCs and industrial I/O devices (in FIG. 2B, an example in which the industrial I/O device is a robotic arm is used for illustration). Both the PLC and the robotic arm are connected to the terminal devices (for example, CPEs in FIG. 2B). As shown in FIG. 2B, in this scenario, the PLC and the robotic arm may be paired, and there may also be a pairing relationship (or referred to as an association relationship) between a CPE connected to the PLC and a CPE connected to the robotic arm. The PLC may send information (for example, a control instruction for controlling the robotic arm) to the CPE connected to the PLC, and the CPE processes the information (which may also be referred to as raw data) received from the PLC, to obtain data. The CPE sends the data through an air interface. After receiving the data, the CPE that is paired with or has the association relationship with the CPE may process the data, and send obtained information to the robotic arm, so that the robotic arm paired with the PLC executes the control instruction sent by the PLC. In the scenario shown in FIG. 2B, a requirement on data transmission latency between the CPE connected to the PLC and the CPE connected to the industrial I/O device is high. For example, a conventional requirement is that the latency is not greater than 8 milliseconds. The solutions provided in embodiments of this application are intended to shorten data transmission latency between two CPEs. To be specific, in embodiments of this application, data sent by a CPE may not need to pass through a network device, a transport network, and a core network, but data sent by the CPE through an air interface may directly arrive at another CPE. Therefore, the data transmission latency can be reduced, and the latency requirement in this scenario can be met.

The scenario shown in FIG. 2B further includes a main control cabinet, an operation island cabinet, a valve island, a power module, and the like that are not shown in FIG. 2B. The solutions provided in embodiments of this application are not limited to the foregoing industrial control scenario, and the foregoing scenario is merely an example.

Based on the embodiments shown in FIG. 1, FIG. 2A, and FIG. 2B and the foregoing other content, **FIG. 3** is an example of a possible schematic flowchart of a communication method according to an embodiment of this application.

In FIG. 3, an example in which execution bodies are a network device, a first terminal device, and a second terminal device is used for description. A solution on a side of the network device in embodiments of this application may alternatively be performed by a unit, a module, or a chip in the network device. A solution on a side of the first terminal device in embodiments of this application may alternatively be performed by a unit, a module, or a chip in the first terminal device. A solution on a side of the second terminal device in embodiments of this application may alternatively be performed by a unit, a module, or a chip in the second terminal device. In FIG. 3, the network device may be the network device in FIG. 2A, and the first terminal device and the second terminal device may be two terminal devices in FIG. 2A. For example, the first terminal device may be the terminal device 201 in FIG. 2A, and the second terminal device may be the terminal device 202.

As shown in FIG. 3, the method includes the following steps.

**Step 301:** The network device obtains first configuration information and second configuration information.

The first configuration information includes information about a time-frequency domain resource for sending uplink data by the first terminal device. The second configuration information includes information about a time-frequency domain resource for receiving downlink data by the second terminal device. The time-frequency domain resource for sending the uplink data by the first terminal device is the same as the time-frequency domain resource for receiving the downlink data by the second terminal device.

In a possible implementation, the solution provided in embodiments of this application may be applied to a TDD transmission mode. In the TDD transmission mode, a frequency domain resource for sending the uplink data by the first terminal device may be the same as a frequency domain resource for receiving the downlink data by the second terminal device. Further, the network device may adjust a time domain resource for sending the uplink data by the first terminal device and a time domain resource for receiving the downlink data by the second terminal device, so that the time domain resource for sending the uplink data by the first terminal device is the same as the time domain resource for receiving the downlink data by the second terminal device.

**Step 302:** The network device sends the first configuration information to the first terminal device.

Correspondingly, the first terminal device receives the first configuration information.

**Step 303:** The network device sends the second configuration information to the second terminal device.

Correspondingly, the second terminal device receives the second configuration information.

There is no absolute chronological order between step 302 and step 303. Alternatively, step 303 may be first performed, and then step 302 is performed.

**Step 304:** The first terminal device sends the uplink data on the time-frequency domain resource for sending the uplink data by the first terminal device.

Correspondingly, the second terminal device receives the uplink data from the first terminal device on the time-frequency domain resource for receiving the downlink data by the second terminal device.

In step 304, the first terminal device sends the uplink data through an air interface (the air interface in embodiments of this application may also be understood as a wireless air interface). The network device may also receive the uplink data from the first terminal device. In FIG. 3, an example in which the network device and the second terminal device receive the uplink data is used for illustration.

In embodiments of this application, the uplink data may be data sent by the first terminal device. For example, the uplink data includes data sent by the first terminal device through the air interface, and the data may be received by the network device and/or the second terminal device. The uplink data in embodiments of this application may include, for example, a physical uplink shared channel (physical uplink shared channel, PUSCH). The PUSCH may be referred to as a service channel, and may be for transmission of communication information between terminal devices.

In embodiments of this application, the downlink data may be data received by the second terminal device. For example, the downlink data includes data (for example, a physical downlink shared channel (physical downlink shared channel, PDSCH)) that is received by the second terminal device from the network device through the air interface, and the downlink data may also include data (for example, the uplink data from the first terminal device, for example, the PUSCH from the first terminal device) that is received by the second terminal device from the first terminal device through the air interface. After the uplink data sent by the first terminal device is received by the second terminal device through the air interface, the second terminal device may process the received uplink data as downlink data, and obtain information from the uplink data. This may also be understood as: Data (or referred to as the downlink data) received by the second terminal device on the time-frequency domain resource for receiving the downlink data includes the uplink data sent by the first terminal device.

In a possible implementation, the network device may further send, to the first terminal device, information indicating that a cell slot type of the first terminal device is flexible. The network device may further send, to the second terminal device, information indicating that a cell slot type of the second terminal device is flexible. It can be learned that, because the network device configures the cell slot types of the first terminal device and the second terminal device as "flexible (flexible)", the network device does not strictly limit whether a slot is an uplink slot or a downlink slot. Therefore, the network device may flexibly indicate (for example, by using DCI) a slot to be used as a data sending slot (or referred to as an uplink data transmission slot) for the first terminal device (a sending-end device), and the slot is used as a data receiving slot (or referred to as a downlink data transmission slot) for the second terminal device (a receiving-end device). Then, the second terminal device may receive the uplink data from the first terminal device in the slot.

The time-frequency domain resource for sending the uplink data by the first terminal device is the same as the time-frequency domain resource for receiving the downlink data by the second terminal device. Therefore, the uplink data sent by the first terminal device through the air interface may be received by the second terminal device. This may also be understood as: When receiving the data on the time-frequency domain resource for receiving the downlink data by the second terminal device, the second terminal device receives the uplink data from the first terminal device, and the second terminal device may consider the uplink data as downlink data from the network device, and perform processing through a downlink data processing procedure, to obtain the information in the uplink data.

It can be learned that, in this solution, the information (or referred to as raw data) sent by the first terminal device is carried in the uplink data, and may be directly sent to the second terminal device through the air interface. In other words, the information (or referred to as the raw data) in the uplink data may directly arrive at the second terminal device without transmission performed by the network device, a transport network, and a core network. This can reduce data transmission latency between the first terminal device and the second terminal device.

According to the solution provided in embodiments of this application, latency in a process of processing the uplink data by the network device can be reduced, latency of processing the uplink data by the core network can be reduced, and latency of communicating the uplink data and downlink data through the wireless air interface can be shortened, so that a requirement of a scenario, for example, industrial manufacturing, that has a strict latency requirement can be met.

In addition, in embodiments of this application, communication between the first terminal device and the second terminal device does not need to rely on a specific spectrum. This improves applicability of this solution. Moreover, this solution does not impose a high requirement on a capability of the terminal device, but imposes a low requirement on the capability of the terminal device. This can reduce costs of the terminal device.

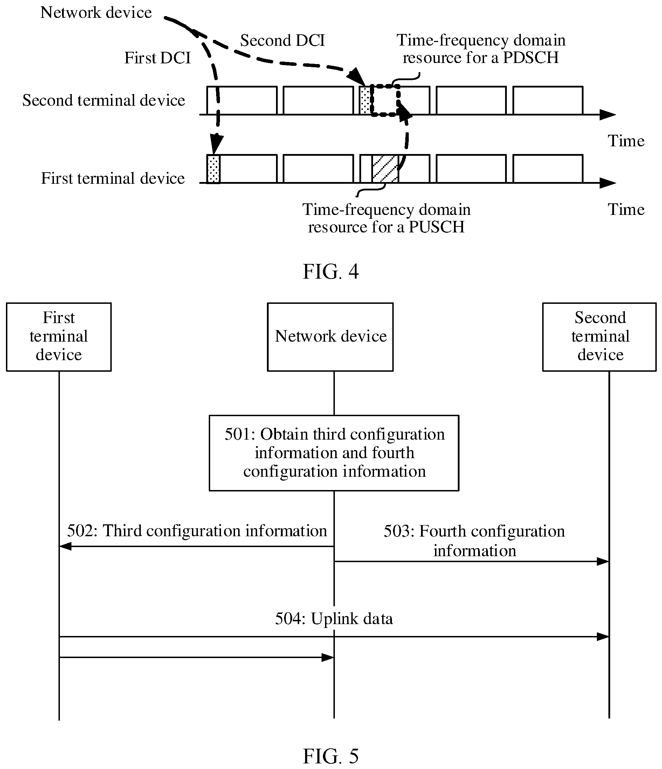

In a possible implementation, the first configuration information and the second configuration information may be carried in DCI. For example, the first configuration information may be carried in first DCI, and the second configuration information may be carried in second DCI. FIG. 4 is an example of a diagram of a communication method according to an embodiment of this application. As shown in FIG. 4, a network device indicates, by using first DCI, a time-frequency domain resource for sending uplink data by a first terminal device (in FIG. 4, an example in which the uplink data is a PUSCH is used for presentation), and the network device indicates the time-frequency domain resource to be a time-frequency domain resource for receiving downlink data by a second terminal device (in FIG. 4, an example in which the downlink data is a PDSCH is used for presentation). Because the time-frequency domain resource for sending the uplink data by the first terminal device is the same as the time-frequency domain resource for receiving the downlink data by the second terminal device, when receiving data on the time-frequency domain resource for receiving the downlink data (for example, the PDSCH) by the second terminal device, the second terminal device may receive the uplink data (for example, the PUSCH) from the first terminal device, and the second terminal device may consider the uplink data as downlink data sent by the network device to the second terminal device, and may process the uplink data through a procedure for processing downlink data from the network device, to obtain information in the uplink data.

For example, with reference to FIG. 4, the first terminal device is connected to a PLC, and the second terminal device is connected to an industrial I/O device (for example, a fixture or a robotic arm). The PUSCH sent by the first terminal device includes action indication information. The action indication information indicates the industrial I/O device (for example, the fixture or the robotic arm) connected to the second terminal device to complete a specified action. The action indication information comes from the PLC connected to the first terminal device. The first terminal device sends the action indication information on the time-frequency domain resource that is configured by using first configuration information and that is for sending the PUSCH. Because the time domain resource that is configured for the second terminal device by using second configuration information and that is for receiving the PDSCH is the same as the time-frequency domain resource for sending the PUSCH by the first terminal device, the second terminal device may receive the action indication information when receiving the data on the time-frequency domain resource for receiving the PDSCH. Then, the second terminal device may consider the received action indication information as downlink data, and process the action indication information through the procedure for processing the downlink data from the network device, to obtain information in the action indication information. Further, the second terminal device may send the information in the action indication information to the industrial I/O device (for example, the fixture or the robotic arm) connected to the second terminal device. In this way, the industrial I/O device (for example, the fixture or the robotic arm) may perform the action indicated by the action indication information.

For another example, the first terminal device is connected to an industrial I/O device (for example, a fixture or a robotic arm), and the second terminal device is connected to a PLC. The PUSCH sent by the first terminal device may include state indication information of the industrial I/O device, where the state indication information indicates a state, for example, a normal operating state or a faulty state, of the industrial I/O device connected to the first terminal device. The state indication information comes from the industrial I/O device. The first terminal device may send the state indication information on the time-frequency domain resource that is for the uplink data and that is configured for the first terminal device by using first configuration information. Similarly, when receiving the data on the time-frequency domain resource for receiving the downlink data, the second terminal device may receive the state indication information, and process the status indication information through the procedure for processing the downlink data from the network device, to obtain information in the state indication information. Further, the second terminal device may send the information in the state indication information to the PLC connected to the second terminal device. In this way, the PLC may control, based on the state of the industrial I/O device, the industrial I/O device to perform a subsequent action.

In another possible implementation, the network device may send, to the first terminal device, information for modulating and encoding the uplink data, and the first terminal device may receive, from the network device, the information for modulating and encoding the uplink data. The information for modulating and encoding the uplink data may be carried in first DCI. The network device may send, to the second terminal device, information for modulating and encoding the downlink data, and the second terminal device may receive, from the network device, the information for demodulating and decoding the downlink data. The information for demodulating and decoding the downlink data may be carried in second DCI. The information for modulating and encoding the uplink data matches the information for demodulating and decoding the downlink data. In this way, the second terminal device may successfully demodulate and decode the uplink data obtained by the first terminal device through modulation and encoding processing, to obtain the information (or referred to as raw data) in the uplink data.

For example, the information for modulating and encoding the uplink data includes information about a first modulation and coding scheme (modulation code scheme, MCS). The information for demodulating and decoding the downlink data includes information about a second MCS. The first MCS is the same as the second MCS. In this way, the second terminal device may demodulate and decode, by using the second MCS, the uplink data obtained by the first terminal device through modulation and encoding by using the first MCS, to obtain the information (or referred to as the raw data) in the uplink data.

In still another possible implementation, the network device sends, to the first terminal device, information indicating a time domain resource for sending an uplink control indicator (uplink control indicator, UCI) by the first terminal device. Correspondingly, the first terminal device receives, from the network device, the information indicating the time domain resource for sending the UCI by the first terminal device. The time domain resource for sending the UCI by the first terminal device is different from the time domain resource for the uplink data. The information indicating the time domain resource for sending the uplink control indicator UCI by the first terminal device may be carried in DCI, for example, may be carried in first DCI.

If the first terminal device needs to send control information on the time domain resource for sending the uplink data (the uplink data is service data) (in other words, a time domain resource for the control information is the same as the time domain resource for the uplink data), the first terminal device may send the control information and the uplink data together. The control information may be referred to as the UCI. However, in embodiments of this application, the network device may control the time domain resource for sending the UCI by the first terminal device to be different from the time domain resource for the uplink data. To be specific, the network device may control the first terminal device not to send a UCI together with the service data when sending the service data, so that the uplink data received by the second terminal device does not include the UCI. This can reduce complexity of processing the received uplink data by the second terminal device, and improve a success rate of decoding the received uplink data by the second terminal device.

Based on the embodiments shown in FIG. 1, FIG. 2A, FIG. 2B, FIG. 3, and FIG. 4 and the foregoing other content, **FIG. 5** is an example of a possible schematic flowchart of a communication method according to an embodiment of this application. For descriptions of execution bodies in FIG. 5, refer to related descriptions in FIG. 3. Details are not described again.

As shown in FIG. 5, the method includes the following steps.

**Step 501:** The network device obtains third configuration information and fourth configuration information.

The third configuration information is used by the first terminal device to send uplink data. The fourth configuration information is used by the second terminal device to receive downlink data. The third configuration information matches the fourth configuration information.

**Step 502:** The network device sends the third configuration information to the first terminal device.

Correspondingly, the first terminal device receives, from the network device, the third configuration information for sending the uplink data.

In this embodiment of this application, the third configuration information sent by the network device to the first terminal device may be carried in existing signaling, or may be carried in newly defined signaling. For example, the third configuration information may be carried in an RRC reconfiguration message.

**Step 503:** The network device sends the fourth configuration information to the second terminal device.

Correspondingly, the second terminal device receives, from the network device, the fourth configuration information for receiving the downlink data.

In this embodiment of this application, the fourth configuration information sent by the network device to the second terminal device may be carried in existing signaling, or may be carried in newly defined signaling. For example, the fourth configuration information may be carried in an RRC reconfiguration message.

There is no absolute chronological order between step 502 and step 5034. Alternatively, step 503 may be first performed, and then step 502 is performed.

**Step 504:** The first terminal device sends the uplink data based on the third configuration information.

Correspondingly, the second terminal device receives the uplink data from the first terminal device based on the fourth configuration information.

In step 504, the first terminal device sends the uplink data through the air interface (the air interface in embodiments of this application may also be understood as the wireless air interface). The network device may also receive the uplink data from the first terminal device. In FIG. 5, an example in which the network device and the second terminal device receive the uplink data is used for illustration.

Because the third configuration information matches the fourth configuration information, and the first terminal device sends the uplink data through the air interface based on the third configuration information, when receiving the data through the air interface based on the fourth configuration information, the second terminal device may successfully receive the uplink data from the first terminal device. This may also be understood as: When receiving the data based on the fourth configuration information, the second terminal device receives the uplink data sent by the first terminal device through the air interface, and the second terminal device considers the uplink data as the downlink data from the network device, and performs processing based on the fourth configuration information (in other words, a process in which the second terminal device processes the uplink data is a reverse process of a process in which the first terminal device obtains the uplink data), to successfully obtain the information in the uplink data.

It can be learned that, in this solution, the information (or referred to as the raw data) sent by the first terminal device is carried in the uplink data, and may be directly sent to the second terminal device through the air interface. In other words, the information (or referred to as the raw data) in the uplink data may directly arrive at the second terminal device without transmission performed by the network device, the transport network, and the core network. This can reduce the data transmission latency between the first terminal device and the second terminal device.

In addition, in embodiments of this application, the communication between the first terminal device and the second terminal device does not need to rely on a specific spectrum. This improves the applicability of this solution. Moreover, this solution does not impose a high requirement on the capability of the terminal device, but imposes a low requirement on the capability of the terminal device. This can reduce the costs of the terminal device.

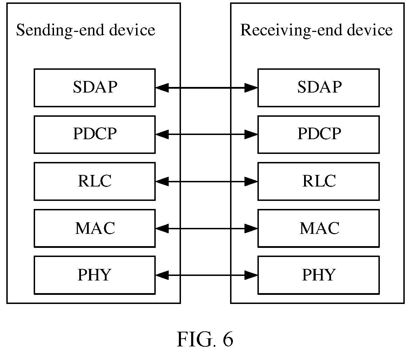

Embodiments of this application are applicable to protocol stacks in a plurality of communication systems. The following uses a 5G communication system as an example for description. **FIG. 6** is an example of a possible diagram of a structure of a protocol stack in the 5G communication system. As shown in FIG. 6, the communication system includes a sending-end device and a receiving-end device. The sending-end device may be a terminal device (the first terminal device or the second terminal device) or the network device, and the receiving-end device may be a terminal device (the first terminal device or the second terminal device) or the network device. Some content in embodiments of this application is described by using an example in which the first terminal device is the sending-end device and the second terminal device is the receiving-end device. During actual application, the second terminal device may alternatively send data. When the second terminal device sends the data, the second terminal device may be considered as the sending-end device. The first terminal device may alternatively receive data. When the first terminal device receives the data, the first terminal device may alternatively be considered as the receiving-end device.

As shown in FIG. 6, a user plane protocol stack of the sending-end device (the terminal device or the network device) may include a service data adaptation protocol (service data adaptation protocol, SDAP) layer, a packet data convergence protocol (Packet Data Convergence Protocol, PDCP) layer, a radio link control (radio link control, RLC) layer, a media access control (media access control, MAC) layer, and a physical (physical, PHY) layer. A user plane protocol stack of the receiving-end device (the terminal device or the network device) may include an SDAP layer, a PDCP layer, an RLC layer, a MAC layer, and a PHY layer.

In this embodiment of this application, there are two data transmission modes. The following separately describes the two data transmission modes by using a manner 1 and a manner 2.

**Manner 1:** The sending-end device is the first terminal device, and the receiving-end device is the second terminal device.

As shown in FIG. 6, information (or referred to as raw data) of the sending-end device (the first terminal device) needs to be sequentially processed by the SDAP layer, the PDCP layer, the RLC layer, the MAC layer, and the PHY layer to be sent to the bottom of the protocol stack layer by layer. After reaching the PHY layer, processed data is sent through a wireless air interface (the data sent by the first terminal device through the wireless air interface may be referred to as uplink data), for example, is sent to the PHY layer of the receiving-end device (the second terminal device) through the wireless air interface. The data received by the PHY layer of the receiving-end device (the second terminal device) is then sequentially processed by the MAC layer, the RLC layer, the PDCP layer, and the SDAP layer, to restore the information (or referred to as the raw data).

It should be noted that, in the manner 1, the uplink data sent by the first terminal device is transmitted to air through the wireless air interface, and the second terminal device directly receives the uplink data through the wireless air interface. In other words, the network device, a transport network element, or a core network element does not perform communication on the uplink data. Therefore, in the manner 1, information transmission latency between the first terminal device and the second terminal device is short.

**Manner 2:** The sending-end device is the first terminal device, and the receiving-end device is the network device.

When the sending-end device is the first terminal device, the network device may also receive the uplink data sent by the first terminal device through the wireless air interface.

Using FIG. 6 as an example, information (or referred to as raw data) obtained by the first terminal device needs to be sequentially processed by the SDAP layer, the PDCP layer, the RLC layer, the MAC layer, and the PHY layer to be sent to the bottom of the protocol stack layer by layer. After reaching the PHY layer, processed data is sent through a wireless air interface (the data sent by the first terminal device through the wireless air interface may be referred to as uplink data), for example, is sent to the PHY layer of the network device through the wireless air interface. The data received by the PHY layer of the network device is then sequentially processed by the MAC layer, the RLC layer, the PDCP layer, and the SDAP layer, to restore the information (or referred to as the raw data).

Further, when the network device needs to send the information (or referred to as the raw data) to the second terminal device, the network device may serve as a sending-end device of the data, and the information (or referred to as the raw data) is sequentially processed by the SDAP layer, the PDCP layer, the RLC layer, the MAC layer, and the PHY layer to be sent to the bottom of the protocol stack layer by layer. After reaching the PHY layer, processed data is sent through the wireless air interface (the data sent by the network device through the wireless air interface may be referred to as downlink data), for example, is sent to the PHY layer of the second terminal device through the wireless air interface. Data received by the PHY layer of the second terminal device may be then sequentially processed by the MAC layer, the RLC layer, the PDCP layer, and the SDAP layer, to restore the information (or referred to as the raw data).

For the foregoing manner 1, because the second terminal device needs to process the uplink data from the first terminal device, to improve a success rate of parsing the uplink data from the first terminal device by the second terminal device, the network device may set a processing manner of each protocol stack. The following describes several possible protocol stack setting manners with reference to FIG. 6.

### (1) SDAP layer

The SDAP layer is located above the packet data convergence protocol (packet data convergence protocol, PDCP) layer, directly carries an Internet protocol (Internet protocol, IP) data packet, and may be used on a user plane. The SDAP layer may be responsible for mapping between a quality of service (quality of service, QoS) flow and a data resource bearer (data radio bearer, DRB) (data radio bearer), and adding a quality of service flow identifier (QoS flow identifier, QFI) tag to a data packet.

In a possible implementation, the third configuration information further includes information indicating an SDAP entity of the first terminal device not to configure an SDAP header. In embodiments of this application, the SDAP entity of the first terminal device may be understood as a unit, a module, or a chip system that is responsible for a processing procedure at the SDAP layer of the first terminal device. In this way, the first terminal device (the sending-end device) does not include the SDAP header in the obtained uplink data. This can reduce difficulty in processing the uplink data by the second terminal device (the receiving-end device), and improve the success rate of parsing the uplink data.

In another possible implementation, the fourth configuration information further includes information indicating an SDAP entity of the second terminal device not to process an SDAP header. In embodiments of this application, the SDAP entity of the second terminal device may be understood as a unit, a module, or a chip system that is responsible for a processing procedure at the SDAP layer of the second terminal device. This can reduce difficulty in processing the uplink data by the second terminal device (the receiving-end device), and improve a success rate of parsing the uplink data. In addition, when the SDAP entity of the first terminal device does not configure the SDAP header, a protocol stack configuration of the first terminal device for uplink data processing matches (or is aligned with) a protocol stack configuration of the second terminal device for downlink data processing. In this way, a success rate of receiving the uplink data by the second terminal device can be improved.

### (2) PDCP layer

In a possible implementation, the third configuration information includes information indicating a PDCP entity of the first terminal device not to perform header compression processing. In embodiments of this application, the PDCP entity of the first terminal device may be understood as a unit, a module, or a chip system that is responsible for a processing procedure at the PDCP layer of the first terminal device. In this way, the first terminal device (the sending-end device) does not perform PDCP header compression on the obtained uplink data. This can reduce difficulty in processing the uplink data by the second terminal device (the receiving-end device), and improve the success rate of parsing the uplink data.

In another possible implementation, the fourth configuration information includes information indicating a PDCP entity of the second terminal device not to perform header decompression processing. In embodiments of this application, the PDCP entity of the second terminal device may be understood as a unit, a module, or a chip system that is responsible for a processing procedure at the PDCP layer of the second terminal device. This can reduce difficulty in processing the uplink data by the second terminal device (the receiving-end device), and improve the success rate of parsing the uplink data. In addition, when the first terminal device does not perform PDCP header compression on the uplink data, a protocol stack configuration of the first terminal device for uplink data processing matches (or is aligned with) a protocol stack configuration of the second terminal device for downlink data processing. In this way, a success rate of receiving the uplink data by the second terminal device can be improved.

In a possible implementation, the third configuration information includes information indicating a PDCP entity of the first terminal device not to perform encryption processing. In this way, the first terminal device (the sending-end device) does not perform PDCP layer encryption on the obtained uplink data. This can reduce difficulty in processing the uplink data by the second terminal device (the receiving-end device), and improve the success rate of parsing the uplink data.

In another possible implementation, the fourth configuration information includes information indicating a PDCP entity of the second terminal device not to perform decryption processing. This can reduce difficulty in processing the uplink data by the second terminal device (the receiving-end device), and improve the success rate of parsing the uplink data. In addition, when the first terminal device does not perform PDCP encryption on the uplink data, a protocol stack configuration of the first terminal device for uplink data processing matches (or is aligned with) a protocol stack configuration of the second terminal device for downlink data processing. In this way, a success rate of receiving the uplink data by the second terminal device can be improved.

In a possible implementation, the third configuration information includes information indicating a PDCP entity of the first terminal device not to perform integrity protection processing. In this way, the first terminal device (the sending-end device) does not perform PDCP layer integrity protection on the obtained uplink data. This can reduce difficulty in processing the uplink data by the second terminal device (the receiving-end device), and improve the success rate of parsing the uplink data.

In another possible implementation, the fourth configuration information includes information indicating a PDCP entity of the second terminal device not to perform integrity protection processing. This can reduce difficulty in processing the uplink data by the second terminal device (the receiving-end device), and improve the success rate of parsing the uplink data. In addition, when the first terminal device does not perform PDCP integrity protection on the uplink data, a protocol stack configuration of the first terminal device for uplink data processing matches (or is aligned with) a protocol stack configuration of the second terminal device for downlink data processing. In this way, a success rate of receiving the uplink data by the second terminal device can be improved.

In a possible implementation, a 5G PDCP entity may perform header compression, encryption, and integrity protection processing on received data, and the network device may configure the PDCP entity of the sending-end device not to perform header compression, data encryption, and integrity protection on received data. The PDCP entity of the receiving-end device may not perform header decompression, data decryption, and integrity protection processing on received data. In this way, a protocol stack configuration of the first terminal device for uplink data processing matches (or is aligned with) a protocol stack configuration of the second terminal device for downlink data processing. This can improve a success rate of receiving the uplink data by the second terminal device.

### (3) RLC layer

The RLC layer is located below the PDCP layer, and an entity may be in an unacknowledged mode (unacknowledged mode, UM) and an acknowledged mode (acknowledged mode, AM). In the AM, the receiving-end device needs to feed back a status report, so that the sending-end device determines whether the receiving-end device has correctly received data. In the UM, the receiving-device does not need to feed back a status report.

In a possible implementation, the third configuration information further includes information indicating to configure an RLC entity of the first terminal device to be in the RLC UM mode. In embodiments of this application, the RLC entity of the first terminal device may be understood as a unit, a module, or a chip system that is responsible for a processing procedure at the RLC layer of the first terminal device. In this way, the second terminal device (the receiving-end device) does not need to feed back the status report, so that complexity of this solution can be reduced.

In another possible implementation, the fourth configuration information further includes information indicating to configure an RLC entity of the second terminal device to be in the RLC UM mode. In embodiments of this application, the RLC entity of the second terminal device may be understood as a unit, a module, or a chip system that is responsible for a processing procedure at the RLC layer of the second terminal device. In this way, the second terminal device (the receiving-end device) does not need to feed back the status report, so that complexity of this solution can be reduced. When the RLC entity of the first terminal device is configured to be in the RLC UM mode, a protocol stack configuration of the first terminal device for uplink data processing matches (or is aligned with) a protocol stack configuration of the second terminal device for downlink data processing. In this way, a success rate of receiving the uplink data by the second terminal device can be improved.

### (4) MAC layer

Functions of a 5G MAC layer are similar to those of a 4G MAC layer, and a main function is scheduling. The functions include resource scheduling, mapping between a logical channel and a transport channel, multiplexing/demultiplexing, and a hybrid automatic repeat request (hybrid automatic repeat request, HARQ) (uplink and downlink asynchronization).

In a possible implementation, the third configuration information includes information indicating a MAC entity of the first terminal device not to include a MAC control element (control element, CE) in a MAC PDU. In embodiments of this application, the MAC entity of the first terminal device may be understood as a unit, a module, or a chip system that is responsible for a processing procedure at the MAC layer of the first terminal device. Because the uplink data sent by the first terminal device does not include the MAC CE, difficulty in processing the uplink data by the second terminal device (the receiving-end device) can be reduced, and the success rate of parsing the uplink data can be improved.

### (5) Physical (physical, PHY) layer

Main functions of a 5G PHY layer may include error detection, forward error correction (forward error correction, FEC), encryption and decryption, rate matching, physical channel mapping, adjustment, demodulation, frequency synchronization, time synchronization, wireless measurement, and multiple-input multiple-output (multiple-input multiple-output, MIMO) processing.

**(5.1)** Pilot configuration information included in the third configuration information is the same as pilot configuration information in the fourth configuration information.

In a possible implementation, the pilot configuration information in the third configuration information indicates a pilot sequence. For example, the third configuration information may include one or more of a quantity of symbols occupied by a pilot, a pilot type, information indicating whether an additional pilot is included, a location of the additional pilot, and a scrambling identifier for scrambling the pilot sequence. The pilot configuration information in the fourth configuration information indicates a pilot sequence. The fourth configuration information may include one or more of a quantity of symbols occupied by a pilot, a pilot type, information indicating whether an additional pilot is included, a location of the additional pilot, and a scrambling identifier for scrambling the pilot sequence. That pilot configuration information included in the third configuration information is the same as pilot configuration information in the fourth configuration information may include, for example, one or more of the following content: The quantity that is of symbols occupied by the pilot sequence and that is in the third configuration information is the same as the quantity that is of symbols occupied by the pilot sequence and that is in the fourth configuration information, the pilot sequence type in the third configuration information is the same as the pilot sequence type in the fourth configuration information, the information that indicates whether the additional pilot is included and that is in the third configuration information is the same as the information that indicates whether the additional pilot is included and that is in the fourth configuration information, the location that is of the additional pilot and that is in the third configuration information is the same as the location that is of the additional pilot and that is in the fourth configuration information, and the scrambling identifier that is for scrambling the pilot sequence and that is in the third configuration information is the same as the scrambling identifier that is for scrambling the pilot sequence and that is in the fourth configuration information.

The first terminal device may send the pilot sequence based on the pilot configuration information in the third configuration information. The second terminal device may receive the pilot sequence based on the pilot configuration information in the fourth configuration information. The pilot configuration information included in the third configuration information is the same as the pilot configuration information in the fourth configuration information. Therefore, the second terminal device knows the pilot sequence sent by the first terminal device, and the second terminal device may successfully receive the pilot sequence. Then, the second terminal device may estimate, based on the pilot sequence, information about a channel through which the data passes during radio propagation, and may restore, based on the estimated information about the channel, the information (or referred to as the raw data) from the uplink data received from the terminal device.

**(5.2)** A carrier waveform for the uplink data sent by the first terminal device is the same as a carrier waveform for the downlink data received by the second terminal device.

Because the carrier waveform for the uplink data sent by the first terminal device is the same as the carrier waveform for the downlink data received by the second terminal device, a success rate of correctly demodulating, by the second terminal device, the uplink data sent by the first terminal device can be improved.

In a possible implementation, the third configuration information further includes information about the carrier waveform for the uplink data. The fourth configuration information further includes information about the carrier waveform for the downlink data.

In a possible implementation, it is specified in a 5G protocol that a carrier waveform for downlink data includes a multi-carrier waveform and a carrier waveform for uplink data may be a single-carrier waveform and the multi-carrier waveform. Therefore, in this embodiment of this application, the network device may configure both the carrier waveform for the uplink data sent by the first terminal device and the carrier waveform for the downlink data received by the second terminal device as the multi-carrier waveform.

**(5.3)** A quantity of codewords for sending the uplink data by the first terminal device in one slot is the same as a quantity of codewords for receiving the downlink data by the second terminal device in one slot.

Because the quantity of codewords for sending the uplink data by the first terminal device in one slot is the same as the quantity of codewords for receiving the downlink data by the second terminal device in one slot, a success rate of correctly demodulating, by the second terminal device, the uplink data sent by the first terminal device can be improved.

In a possible implementation, the third configuration information further includes the quantity of codewords for sending the uplink data by the first terminal device in one slot. The fourth configuration information further includes the quantity of codewords for receiving the downlink data by the second terminal device in one slot.

In a possible implementation, it is specified in a 5G protocol that downlink data may be a single-codeword (a quantity of codewords for receiving the downlink data in one slot is 1) or a dual-codeword (a quantity of codewords for receiving the downlink data in one slot is 2) and uplink data may be the single-codeword (a quantity of codewords for sending the uplink data in one slot is 1). Therefore, in this embodiment of this application, the network device may configure both the uplink data sent by the first terminal device and the downlink data received by the second terminal device as the single-codeword, in other words, the quantity of codewords for sending the uplink data by the first terminal device in one slot is 1, and the quantity of codewords for receiving the downlink data by the second terminal device in one slot is 1.

The foregoing describes a processing manner of each protocol stack in a process of processing the uplink data by the first terminal device and a processing manner of each protocol stack in a process of processing the downlink data by the second terminal device. Because a configuration of each protocol stack in the process of processing the uplink data by the first terminal device matches the processing manner of each protocol stack in the process of processing the downlink data by the second terminal device, when the second terminal device receives the uplink data sent by the first terminal device through the wireless air interface, the second terminal device may process the uplink data through the downlink data processing procedure, and successfully obtain the information (or referred to as the raw data) from the uplink data. This may also be understood as: The second terminal device may consider the received uplink data sent by the first terminal device through the wireless air interface as downlink data, and process the uplink data. Because the configuration of each protocol stack of the first terminal device matches the configuration of each protocol stack of the second terminal device, the second terminal device may successfully process the uplink data through the downlink data processing procedure, to obtain the information (or referred to as the raw data). It can be learned that, in this process, the uplink data sent by the first terminal device may not need to be forwarded by the network device, but is directly sent to the second terminal device through the air interface, so that the data transmission latency between the first terminal device and the second terminal device can be reduced.

**(5.4)** A first scrambling code sequence for scrambling the uplink data is the same as a second scrambling code sequence for descrambling the downlink data.

In a possible implementation, the third configuration information includes information indicating the first scrambling code sequence. In another possible implementation, the fourth configuration information includes information indicating the second scrambling code sequence. Because the first terminal device scrambles the uplink data by using the first scrambling code sequence, and the first scrambling code sequence is the same as the second scrambling code sequence, the second terminal device may successfully descramble the uplink data by using the second scrambling code sequence.

In embodiments of this application, the scrambling processing may mean that the first terminal device changes to-be-sent data in a specific manner by using the first scrambling code sequence, and the second terminal device removes impact of the first scrambling sequence in a reverse process by using the second scrambling code sequence that is the same as the first scrambling code sequence, to obtain the data that has not been scrambled. This can improve data security, and reduce a probability that the data is stolen by another user.

In a possible implementation, the network device may configure, for the first terminal device, a parameter for obtaining the first scrambling code sequence, and configure, for the second terminal device, a parameter for obtaining the second scrambling code sequence. The parameter for obtaining the first scrambling code sequence may be the same as the parameter for obtaining the second scrambling code sequence. The parameter for obtaining the first scrambling code sequence may include, for example, a scrambling identifier and/or a user identifier of the first terminal device. The parameter for obtaining the second scrambling code sequence may include, for example, a scrambling identifier and/or a user identifier of the second terminal device.

**(5.4.1)** The scrambling identifier for obtaining the first scrambling code sequence is the same as the scrambling identifier for obtaining the second scrambling code sequence.

The information that is included in the third configuration information and that indicates the first scrambling code sequence includes the scrambling identifier for obtaining the first scrambling code sequence. The information that is included in the fourth configuration information and that indicates the second scrambling code sequence includes the scrambling identifier for obtaining the second scrambling code sequence.

Because the scrambling identifier for obtaining the first scrambling code sequence is the same as the scrambling identifier for obtaining the second scrambling code sequence, the first scrambling code sequence obtained by the first terminal device may be the same as the second scrambling code sequence obtained by the second terminal device. The scrambling identifier for obtaining the first scrambling code sequence and the scrambling identifier for obtaining the second scrambling code sequence may be allocated by the network device.

**(5.4.2)** The user identifier that is of the first terminal device and that is for obtaining the first scrambling code sequence is the same as the user identifier that is of the second terminal device and that is for obtaining the second scrambling code sequence.

The information that is included in the third configuration information and that indicates the first scrambling code sequence includes the user identifier that is of the first terminal device and that is for obtaining the first scrambling code sequence. The information that is included in the fourth configuration information and that indicates the second scrambling code sequence includes the user identifier that is of the second terminal device and that is for obtaining the second scrambling code sequence. Because the user identifier of the first terminal device is the same as the user identifier of the second terminal device, the first scrambling code sequence obtained by the first terminal device may be the same as the second scrambling code sequence obtained by the second terminal device. The user identifier of the first terminal device and the user identifier of the second terminal device may be allocated by the network device.

Because the network device configures the user identifier of the first terminal device to be the same as the user identifier of the second terminal device, the network device may confuse a PUCCH sent by the first terminal device and a PUCCH sent by the second terminal device. Based on this, in a possible implementation, the network device may configure different frequency domain resources for the PUCCH sent by the first terminal device and the PUCCH sent by the second terminal device, and/or the network device may configure different time domain resources for the PUCCH sent by the first terminal device and the PUCCH sent by the second terminal device. For example, the network device sends, to the first terminal device, information indicating frequency domain and/or time domain for sending the PUCCH by the first terminal device, and the first terminal device receives, from the network device, the information indicating the frequency domain and/or the time domain for sending the PUCCH by the first terminal device. The information that is sent by the network device to the first terminal device and that is about the frequency domain and/or the time domain for the PUCCH may be carried in an RRC message (for example, an RRC reconfiguration message), or may be carried in the third configuration information. The network device sends, to the second terminal device, information indicating frequency domain and/or time domain for sending the PUCCH by the second terminal device, and the second terminal device receives, from the network device, the information indicating the frequency domain and/or the time domain for sending the PUCCH by the second terminal device. The information that is sent by the network device to the second terminal device and that is about the frequency domain and/or the time domain for the PUCCH may be carried in an RRC message (for example, an RRC reconfiguration message), or may be carried in the fourth configuration information. The frequency domain and/or the time domain for sending the PUCCH by the first terminal device do/does not overlap the frequency domain and/or the time domain for sending the PUCCH by the second terminal device. In this way, the network device separately receives the PUCCH from the first terminal device and the PUCCH from the second terminal device on different frequency domain resources and/or time domain resources, so that the network device does not confuse the PUCCH from the first terminal device with the PUCCH from the second terminal device.

Because the network device configures the user identifier of the first terminal device to be the same as the user identifier of the second terminal device, the first terminal device and the second terminal device may confuse PDCCHs sent by the network device to the first terminal device and the second terminal device respectively. Based on this, in a possible implementation, the network device sends, to the first terminal device, information indicating frequency domain and/or time domain for receiving the PDCCH by the first terminal device, and the first terminal device receives, from the network device, the information indicating the frequency domain and/or the time domain for receiving the PDCCH by the first terminal device. The information that is sent by the network device to the first terminal device and that is about the frequency domain and/or the time domain for the PDCCH may be carried in an RRC message (for example, an RRC reconfiguration message), or may be carried in the third configuration information. The network device sends, to the second terminal device, information indicating frequency domain and/or time domain for receiving the PDCCH by the second terminal device, and the second terminal device receives, from the network device, the information indicating the frequency domain and/or the time domain for receiving the PDCCH by the second terminal device. The information that is sent by the network device to the second terminal device and that is about the frequency domain and/or the time domain for the PDCCH may be carried in an RRC message (for example, an RRC reconfiguration message), or may be carried in the fourth configuration information. The frequency domain and/or the time domain for receiving the PDCCH by the first terminal device do/does not overlap the frequency domain and/or the time domain for receiving the PDCCH by the second terminal device. In this way, the network device respectively sends the PDCCHs to the first terminal device and the second terminal device on different frequency domain resources and/or time domain resources, so that the first terminal device and the second terminal device do not confuse the PDCCH sent by the network device to the first terminal device with the PDCCH sent by the network device to the second terminal device.

The embodiments shown in FIG. 5 and FIG. 3 may be separately used, or may be combined for use. When the embodiments shown in FIG. 5 and FIG. 3 are combined for use, step 504 and step 304 may be replaced with the following: The first terminal device sends, based on the third configuration information, the uplink data on the time-frequency domain resource for sending the uplink data by the first terminal device. Correspondingly, the second terminal device receives, based on the fourth configuration information, the uplink data from the first terminal device on the time-frequency domain resource for receiving the downlink data by the second terminal device. The information indicating that the cell slot type of the first terminal device is flexible may be carried in the third configuration information. The information indicating that the cell slot type of the second terminal device is flexible may be carried in the fourth configuration information.

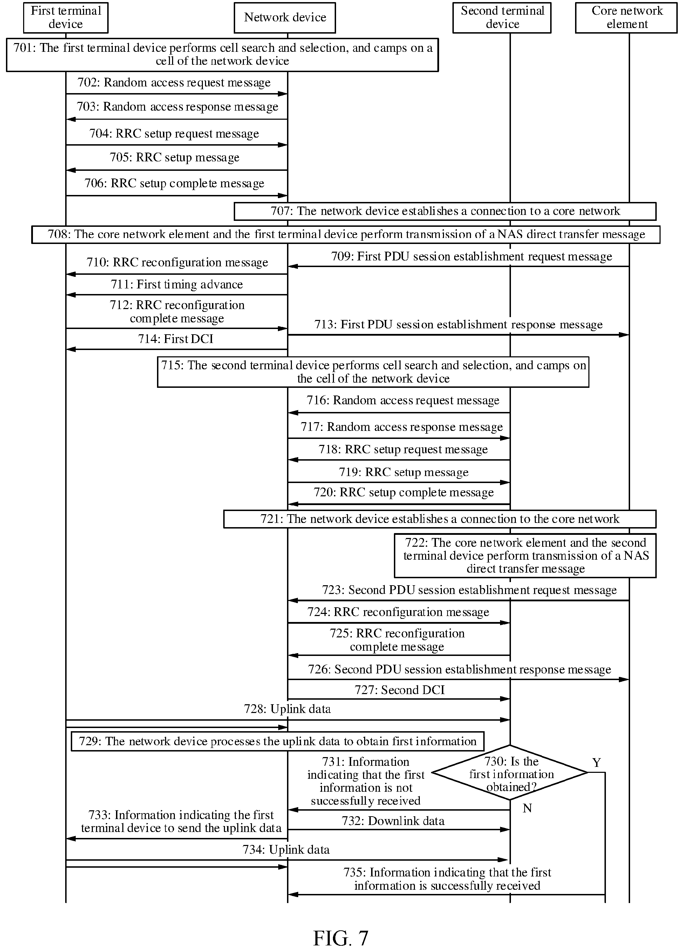

Based on the embodiments shown in FIG. 2A, FIG. 2B, FIG. 3, FIG. 4, FIG. 5, and FIG. 6 and the foregoing other content, **FIG. 7** is an example of a possible schematic flowchart of a communication method according to an embodiment of this application. FIG. 7 may be considered as an extended embodiment of FIG. 5 and/or FIG. 3. For descriptions of execution bodies in FIG. 7, refer to related descriptions in FIG. 3. Details are not described again.

As shown in FIG. 7, the method includes the following steps.

**Step 701:** The first terminal device performs cell search and selection, and camps on a cell of the network device.

In step 701, the network device may send a broadcast message. The first terminal device may perform downlink synchronization with the cell of the network device based on the received broadcast message, and select a cell with good signal quality to camp on.

**Step 702:** The first terminal device may send a random access request message to the network device.

Correspondingly, the network device receives the random access request message from the first terminal device.

The random access request may be a message 1.

**Step 703:** The network device sends a random access response message to the first terminal device.

Correspondingly, the first terminal device receives the random access response message from the network device.

The random access response may include a second timing advance. The second timing advance is used by the first terminal device to perform timing synchronization with the network device, and the second timing advance is determined based on a distance between the first terminal device and the network device.

The random access response may further include the user identifier, for example, a radio network user identifier (radio network temporary identifier, RNTI), of the first terminal device. The user identifier of the first terminal device may be referred to as a temporary user identifier of the first terminal device, and is allocated by the network device to the first terminal device.

The random access response may be a message 2.

**Step 704:** The first terminal device sends an RRC setup request message to the network device.

Correspondingly, the network device receives the RRC setup request message from the first terminal device.

The RRC setup request message may be a message 3.

**Step 705:** The network device sends an RRC setup message to the first terminal device.

Correspondingly, the first terminal device receives the RRC setup message from the network device.

The RRC setup message may be a message 4.

**Step 706:** The first terminal device may send an RRC setup complete message to the network device.

Correspondingly, the network device may receive the RRC setup complete message from the first terminal device.

**Step 707:** The network device establishes a connection to a core network element.

The network device may send, to the core network element through step 707, information about the first terminal device that is carried in the RRC setup complete message in step 706. For example, the network device may send initial terminal device information to the core network element. The initial terminal device information includes the information about the first terminal device, and the initial terminal device information may be referred to as an initial UE message in English.

**Step 708:** The core network element and the first terminal device perform transmission of a NAS direct transfer message.

In step 708, the network device may transparently transmit the NAS direct transfer message between the first terminal device and the core network element. A core network and the first terminal device may complete identity query, authentication, and registration operations on the first terminal device through step 708.

**Step 709:** The core network element sends a first PDU session establishment request message to the network device.

Correspondingly, the network device receives the first PDU session establishment request message from the core network element.

The first PDU session establishment request message may include a PDU session resource setup response. The first PDU session establishment request message may carry the information about the first terminal device, and an association relationship between the first terminal device and the second terminal device may be preconfigured on a core network element side. In this way, the core network element may indicate, to the network device by using the first PDU session establishment request message, that the first terminal device has the association relationship with the second terminal device, so that the network device subsequently determines that the first terminal device has the association relationship with the second terminal device, and then the network device may send the third configuration information and/or the first configuration information to the first terminal device, and send the fourth configuration information and/or the second configuration information to the second terminal device.

**Step 710:** The network device sends an RRC reconfiguration message to the first terminal device.

Correspondingly, the first terminal device receives the RRC reconfiguration message from the network device.

The RRC reconfiguration message may be referred to as RRC reconfiguration. In a possible implementation, in step 502 above, the third configuration information sent by the network device to the first terminal device may be carried in the RRC reconfiguration message in step 710. The RRC reconfiguration message may further include a user identifier of the first terminal device that is reallocated by the network device to the first terminal device. The newly allocated user identifier of the first terminal device is the same as the user identifier of the second terminal device. In this way, the first scrambling code sequence subsequently used by the first terminal device to scramble the uplink data may be the same as the second scrambling code sequence used by the second terminal device to descramble the downlink data.

FIG. 7 shows an example of a solution in which the network device configures the user identifier of the first terminal device. The network device may first allocate a user identifier to the first terminal device, and subsequently update, based on the user identifier of the second terminal device, the user identifier of the first terminal device to a user identifier that is the same as the user identifier of the second terminal device. During actual application, there may be another possible implementation. For example, the network device may send information to the second terminal device (for example, may include a new user identifier of the second terminal device in an RRC reconfiguration message sent in step 724 below), to update the user identifier of the second terminal device to a user identifier that is the same as the user identifier of the first terminal device. For another example, the network device may separately send a same user identifier to the first terminal device and the second terminal device (for example, send a new user identifier to the first terminal device through step 710, and send the new user identifier to the second terminal device through step 724 below), so that the user identifier of the first terminal device is the same as the user identifier of the second terminal device.

**Step 711:** The network device sends a first timing advance to the first terminal device.

Correspondingly, the first terminal device receives the first timing advance from the network device.

The first timing advance is for performing timing synchronization between the first terminal device and the second terminal device, and the first timing advance is determined based on a distance between the first terminal device and the second terminal device.

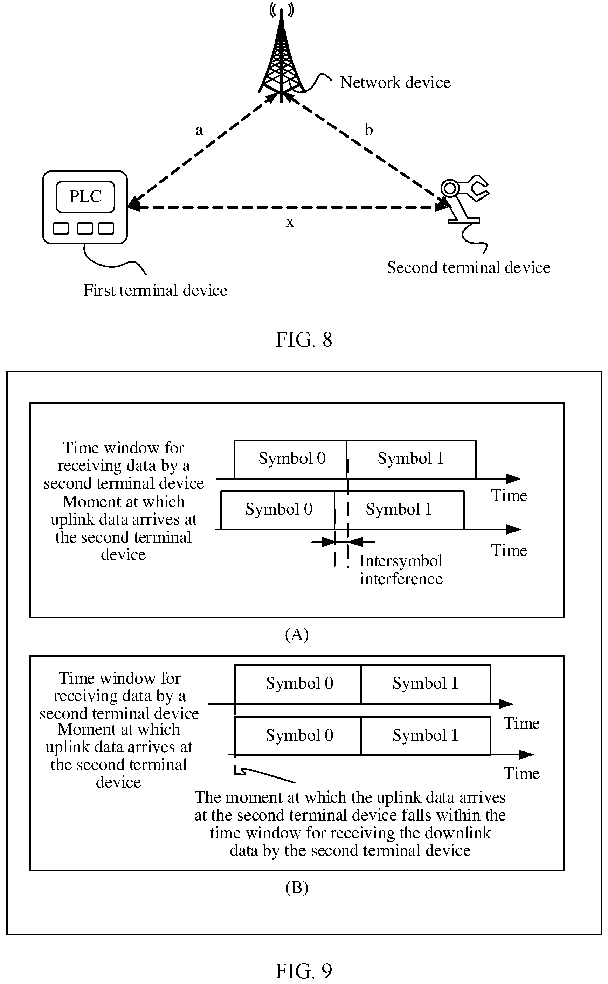

FIG. 8 is an example of a diagram of an architecture of a communication system to which this embodiment of this application is applicable. As shown in FIG. 8, the distance between the first terminal device and the second terminal device is x, the distance between the first terminal device and the network device is a, and a distance between the second terminal device and the network device is b.

Still refer to FIG. 8. The network device may obtain the distance x between the first terminal device and the second terminal device in advance. For example, the network device may query the distance x from the core network element. For another example, the network device may preset the distance x. In an industrial scenario, a location of each terminal device is fixed, or a moving distance is short. Therefore, the solution in which the network device presets the distance x has a wide application prospect. In step 703, the second timing advance sent by the network device to the first terminal device is determined based on the distance a between the first terminal device and the network device. Because the first terminal device and the second terminal device need to directly communicate with each other, the timing synchronization may be performed between the first terminal device and the second terminal device. For example, the network device may send the first timing advance to the first terminal device. The first timing advance may be an adjusted value. After receiving the first timing advance, the first terminal device adjusts (for example, delays), based on the second timing advance, a timing advance by the value indicated by the first timing advance. For example, the first timing advance may be a quotient of (a+b-x) and the speed of light c.

FIG. 9 is an example of a possible diagram of transmitting uplink data by the first terminal device according to this embodiment of this application. As shown in (A) in FIG. 9, because the first terminal device considers latency obtained by dividing the distance between the first terminal device and the network device by a propagation speed of an electromagnetic wave and internal processing latency of the network device, the first terminal device sends the uplink data at a moment earlier than a reference moment of the network device by a period of time. When the second terminal device receives the downlink data, the second terminal device considers that the second terminal device is receiving downlink data sent by the network device. Therefore, considering latency obtained by dividing the distance between the second terminal device and the network device by the propagation speed of the electromagnetic wave, the second terminal device receives the downlink data a period of time later than the reference moment of the network device. If the timing synchronization is performed between the first terminal device and the network device, but is not performed between the first terminal device and the second terminal device, the data sent by the first terminal device arrives at the second terminal device too early, and a signal received by the second terminal device is mixed with data on a next symbol. This causes intersymbol interference and affects demodulation.

For the foregoing problem, in this embodiment of this application, the network device may configure the first terminal device to perform timing synchronization with the second terminal device, for example, adjust (for example, delay), based on the second timing advance, the timing advance by the value indicated by the first timing advance. To be specific, the network device controls the first terminal device to delay sending of the uplink data for a period of time (for example, for the value indicated by the first timing advance). In this way, a moment at which the data sent by the first terminal device arrives at the second terminal device through the air interface may fall within a time window for receiving the signal by the second terminal device, as shown in (B) in FIG. 9. This can reduce the intersymbol interference of the signal received by the second terminal device.

It should be noted that only an example in which the first terminal device performs timing synchronization with the second terminal device before sending the uplink data is shown in the embodiment shown in FIG. 7. During actual application, there may be another manner. For example, the network device may calculate a timing advance based on the distance between the first terminal device and the second terminal device, and send the timing advance to the first terminal device and the second terminal device, or the network device sends, to the second terminal device, information for adjusting the timing advance of the second terminal device, so that the timing synchronization is implemented between the first terminal device and the second terminal device.

**Step 712:** The first terminal device sends an RRC reconfiguration complete message to the network device.

The RRC reconfiguration complete message may be referred to as RRC reconfiguration complete. The RRC reconfiguration complete message may indicate that the first terminal device completes RRC reconfiguration. Step 712 may be performed after step 711 or before step 711.

**Step 713:** The network device sends a first PDU session establishment response message to the core network element.

Correspondingly, the core network element receives the first PDU session establishment response message, where the first PDU session establishment response message is a response message for the first PDU session establishment request message.

**Step 714:** The network device sends the first DCI to the first terminal device.

In this embodiment of this application, the network device may periodically deliver DCI to the first terminal device, and the first DCI may be one piece of DCI in the DCI periodically delivered by the network device. In another possible implementation, when the first terminal device needs to send data, the first terminal device may send a scheduling request to the network device. After receiving the scheduling request, the network device delivers DCI (for example, the first DCI) to the first terminal device.

The first DCI may include the information about the time-frequency domain resource for sending the uplink data by the first terminal device, may further include the information about the first MCS, and may further include the information indicating the time domain resource for sending the UCI by the first terminal device. For the information included in the first DCI, refer to the foregoing descriptions. Details are not described again.

**Step 715:** The second terminal device performs cell search and selection, and camps on the cell of the network device.

In step 715, the network device may send a broadcast message. The second terminal device may perform downlink synchronization with the cell of the network device based on the received broadcast message, and select the cell with good signal quality to camp on.

For related content of step 715, refer to step 701 above. Details are not described again.

**Step 716:** The second terminal device may send a random access request message to the network device.

Correspondingly, the network device receives the random access request message from the second terminal device.

The random access request may be a message 1.

For related content of step 716, refer to step 702 above. Details are not described again.

**Step 717:** The network device sends a random access response message to the second terminal device.

Correspondingly, the second terminal device receives the random access response message from the network device.

The random access response may include a third timing advance. The third timing advance is used by the second terminal device to perform timing synchronization, and the third timing advance is determined based on the distance between the second terminal device and the network device.

The random access response may further include the user identifier, for example, an RNTI, of the second terminal device. The user identifier of the second terminal device may be referred to as a temporary user identifier of the second terminal device, and is allocated by the network device to the second terminal device.

The random access response may be a message 2.

For related content of step 717, refer to step 703 above. Details are not described again.

**Step 718:** The second terminal device sends an RRC setup request message to the network device.

Correspondingly, the network device receives the RRC setup request message from the second terminal device.

The RRC setup request message may be a message 3.

For related content of step 718, refer to step 704 above. Details are not described again.

**Step 719:** The network device sends an RRC setup message to the second terminal device.

Correspondingly, the second terminal device receives the RRC setup message from the network device.

The RRC setup message may be a message 4.

For related content of step 719, refer to step 705 above. Details are not described again.

**Step 720:** The second terminal device may send an RRC setup complete message to the network device.

Correspondingly, the network device may receive the RRC setup complete message from the second terminal device.

For related content of step 720, refer to step 706 above. Details are not described again.

**Step 721:** The network device establishes a connection to the core network element.

The network device may send, to the core network element through step 721, information about the second terminal device that is carried in the RRC setup complete message in step 720. For example, the network device may send initial terminal device information to the core network element. The initial terminal device information may include the information about the second terminal device.

**Step 722:** The core network element and the second terminal device perform transmission of a NAS direct transfer message.

The NAS direct transfer message may be referred to as NAS message transport. In step 722, the network device may transparently transmit the NAS direct transfer message between the second terminal device and the core network element. The core network and the second terminal device may complete identity query, authentication, and registration operations on the second terminal device through step 722.

**Step 723:** The core network element sends a second PDU session establishment request message to the network device.

Correspondingly, the network device receives the second PDU session establishment request message from the core network element.

The first PDU session establishment request message may include a PDU session resource setup response. The second PDU session establishment request message may carry the information about the second terminal device, and the association relationship between the first terminal device and the second terminal device may be preconfigured on the core network element side. In this way, the core network element may indicate, to the network device by using the second PDU session establishment request message, that the first terminal device has the association relationship with the second terminal device, so that the network device subsequently determines that the first terminal device has the association relationship with the second terminal device, and then the network device may send the third configuration information and/or the first configuration information to the first terminal device, and send the fourth configuration information and/or the second configuration information to the second terminal device.

For related content of step 723, refer to step 709 above. Details are not described again.

**Step 724:** The network device sends the RRC reconfiguration message to the second terminal device.

Correspondingly, the second terminal device receives the RRC reconfiguration message from the network device.

In a possible implementation, in step 502, the fourth configuration information sent by the network device to the second terminal device may be carried in the RRC reconfiguration message in step 724.

In a possible implementation, before step 724, the network device may further establish security and the like with the second terminal device. For example, the network device may send a security mode command to the second terminal device, and the second terminal device may send security mode complete to the network device. Other content is not described in detail in this embodiment of this application.

For related content of step 724, refer to step 710 above. Details are not described again.

**Step 725:** The second terminal device sends an RRC reconfiguration complete message to the network device.

The RRC reconfiguration complete message may be referred to as RRC reconfiguration complete. The RRC reconfiguration complete message may indicate that the second terminal device completes RRC reconfiguration.

**Step 726:** The network device sends a second PDU session establishment response message to the core network element.

Correspondingly, the core network element receives the second PDU session establishment response message, where the second PDU session establishment response message is a response message for the second PDU session establishment request message.

**Step 727:** The network device sends the second DCI to the second terminal device.

In this embodiment of this application, the network device may periodically deliver DCI to the second terminal device, and the second DCI may be one piece of DCI in the DCI periodically delivered by the network device. In another possible implementation, when the first terminal device needs to send data, the first terminal device may send a scheduling request to the network device. After receiving the scheduling request, the network device delivers the first DCI to the first terminal device, and sends the second DCI to the second terminal device.

The second DCI may include the information about the time-frequency domain resource for receiving the downlink data by the second terminal device, and may further include the information about the second MCS. For the information included in the second DCI, refer to the foregoing descriptions. Details are not described again.

For related content of step 727, refer to step 714 above. Details are not described again.

**Step 728:** The first terminal device sends the uplink data based on the third configuration information.

Correspondingly, the second terminal device receives the uplink data from the first terminal device based on the fourth configuration information.

In a possible implementation, the network device receives the uplink data from the first terminal device.

For related content of step 728, refer to step 504 above. Details are not described again.

In a possible implementation, after step 728, the method may further include the following content:
**Step 729:** The network device processes the uplink data to obtain first information.

For ease of description, the information (or referred to as the raw data) in the uplink data is referred to as the first information in this embodiment of this application.

**Step 730:** The second terminal device processes the uplink data based on the fourth configuration information, and determines whether the first information is successfully obtained.

When not successfully obtaining the first information in the uplink data, the second terminal device performs step 731.

When successfully obtaining the first information in the uplink data, the second terminal device performs step 735.

**Step 731:** The second network device sends, to the network device, information indicating that the first information is not successfully received.

Correspondingly, the network device receives, from the second terminal device, the information indicating that the first information is not successfully received.

After step 731, the network device may perform step 732 or step 733.

**Step 732:** The network device processes the first information to obtain downlink data, and sends the downlink data to the second terminal device.

**Step 733:** The network device sends, to the first terminal device, information indicating the first terminal device to send the uplink data.

Correspondingly, the first terminal device receives the information indicating the first terminal device to send the uplink data.

**Step 734:** The first terminal device sends the uplink data.

Step 734 is performed after step 733, in other words, the first terminal device sends the uplink data again after receiving the information indicating the first terminal device to send the uplink data.

**Step 735:** The second terminal device sends, to the network device, information indicating that the first information is successfully received.

It can be learned that in this embodiment of this application, if the second terminal device fails to correctly receive the first information sent by the first terminal device, but the network device correctly receives the first information sent by the first terminal device, the network device may schedule the first terminal device to resend the first information; or the network device may switch back to a "normal mode" for transmission between a terminal device and the network device, to be specific, the network device sends the first information (for example, carried in the downlink data) to the second terminal device, and the second terminal device obtains the first information from the downlink data received from the network device.

In this embodiment of this application, the foregoing content is described by using data transmission between the first terminal device and the second terminal device as an example. During actual application, the sending-end device may send data to a plurality of receiving-end devices. For example, the first terminal device may send uplink data to a plurality of second terminal devices. For a solution executed by each second terminal device, refer to the solution that is executed by the second terminal device and that is described in embodiments of this application. Details are not described again.

In another possible implementation, the network device may schedule a plurality of groups of terminal devices on a same time-frequency domain resource for communication. Each group of terminal devices may include two or three terminal devices for communication. For example, a group of terminal devices includes the first terminal device and one or more second terminal devices, and another group of terminal devices includes a third terminal device and a fourth terminal device.

For example, the network device sends fifth configuration information to the third terminal device, and sends sixth configuration information to the fourth terminal device. The fifth configuration information indicates a time-frequency domain resource for sending uplink data by the third terminal device, and the sixth configuration information indicates a time-frequency domain resource for receiving downlink data by the fourth terminal device. The time-frequency domain resource that is for sending the uplink data by the first terminal device and that is indicated by the first configuration information, the time-frequency domain resource that is for receiving the downlink data by the second terminal device and that is indicated by the second configuration information, the time-frequency domain resource that is for sending the uplink data by the third terminal device and that is indicated by the fifth configuration information, and the time-frequency domain resource that is for receiving the downlink data by the fourth terminal device and that is indicated by the sixth configuration information are the same. The time-frequency domain resource in embodiments of this application is a time domain resource and a frequency domain resource.

For differentiation, the scrambling code sequence for scrambling the uplink data sent by the first terminal device is different from a scrambling code sequence for scrambling the uplink data sent by the third terminal device. In this way, on a same time-frequency domain resource, data may be communicated between the first terminal device and the second terminal device, and data may also be communicated between the third terminal device and the fourth terminal device. Because the scrambling code sequence for scrambling the uplink data sent by the first terminal device is different from the scrambling code sequence for scrambling the uplink data sent by the third terminal device, even if the fourth terminal device receives the uplink data from the first terminal device, the fourth terminal device cannot correctly descramble the uplink data; and even if the second terminal device receives the uplink data from the third terminal device, the second terminal device cannot correctly descramble the uplink data. In this way, the network device may schedule a plurality of groups of terminal devices on the same time-frequency domain resource for communication, to improve resource utilization. In addition, the fifth configuration information and the sixth configuration information may be carried in DCI. For a solution to data transmission between the third terminal device and the fourth terminal device, refer to the foregoing solution to the data transmission between the first terminal device and the second terminal device. Details are not described.

It should be noted that names of the foregoing messages are merely used as examples. With evolution of communication technologies, a name of any of the foregoing messages may change. However, regardless of how the names of the messages change, the messages fall within the protection scope of this application provided that meanings of the messages are the same as those of the foregoing messages in this application.

In embodiments of this application, sending information to a terminal device may be understood as that a destination of the information is the terminal device. For example, that a module A sends information to the terminal includes: The module A sends the information to the terminal through an air interface, where optionally, the module A may perform a baseband operation and/or an intermediate radio frequency operation on the information; or the module A submits the information to a module B, and the module B sends the information to the terminal. When sending the information to the terminal, the module B may transparently transmit the information; segment the information to send the information; or multiplex the information and other information to send the information. Optionally, for example, the module B may perform a baseband operation and/or an intermediate radio frequency operation on the information to send the information. Optionally, the module B may encapsulate the information in a data packet. Optionally, the module B may further add a header, a padding bit, and/or the like to the data packet.

In embodiments of this application, receiving information from the terminal device may be understood as that a source of the information is the terminal device. For example, that the module A receives information from the terminal device includes: The module A receives the information from the terminal through an air interface, where optionally, the module A may perform a baseband operation and/or an intermediate radio frequency operation on the information; or the module B receives the information from the terminal through an air interface, and submits the information to the module A. That the module B submits the information to the module A includes: transparently submitting the received information to the module A; combining a plurality of received segments into the information and then submitting the information to the module A; or extracting the information from multiplexed information and then submitting the information to the module A. Optionally, for example, the module B may perform a baseband operation and/or an intermediate radio frequency operation on received information to send the information. Optionally, the information received by the module B is encapsulated in a data packet. Optionally, the data packet includes a header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

The foregoing mainly describes, from a perspective of interactions between the network elements, the solutions provided in this application. It may be understood that, to implement the foregoing functions, the foregoing network elements include corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

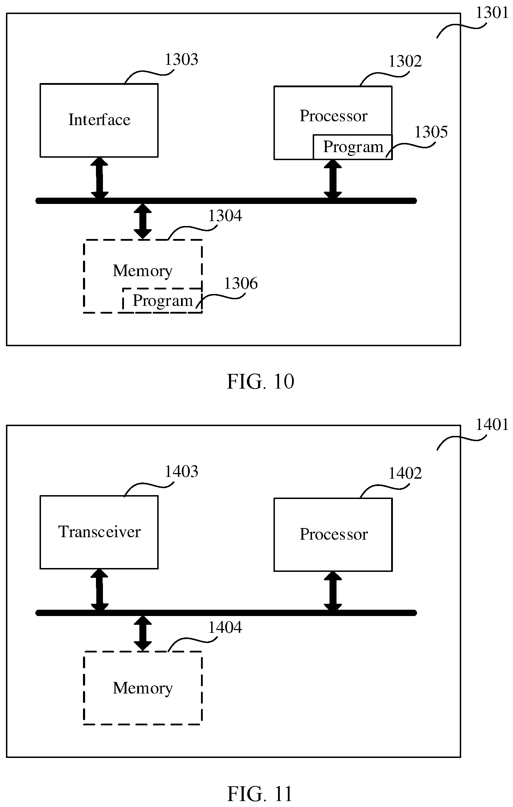

According to the foregoing method, **FIG. 10** is a diagram of a structure of an apparatus according to an embodiment of this application.

FIG. 10 is a simplified diagram of the apparatus 1301. The apparatus 1301 is configured to implement a function of a network element in embodiments of this application. For example, the network element may be a base station, a terminal, a DU, a CU, a CU-CP, a CU-UP, or an RU. The apparatus 1301 may be the network element, an apparatus that can be installed in the network element, or an apparatus that can be used in collaboration with the network element. This is not limited. For example, the apparatus may be a chip or a chip system. The apparatus 1301 includes an interface 1303 and a processor 1302. Optionally, the processor 1302 is configured to execute a program 1305. The processor 1302 may store the program 1305, or obtain the program 1305 from another component or another device (for example, from a memory 1304 or downloaded from a third-party website). Optionally, the apparatus 1301 includes the memory 1304. The memory 1304 is configured to store a program 1306. The program 1306 may be pre-stored, or may be subsequently loaded. Optionally, the memory 1304 may be further configured to store necessary data. These components operate together to provide various functions described in embodiments of this application.

The processor 1302 may include one or more processors to serve as a combination of computing devices. The processor 1302 may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, other appropriate hardware or firmware, and/or a combination of hardware and software configured to perform various functions described in embodiments of this application. The processor 1302 may be a general-purpose processor or a special-purpose processor. For example, the processor 1302 may be a baseband processor or a central processing unit. The baseband processor may be configured to process a communication protocol and communication data. The central processing unit may be configured to execute a software program and process data in the software program.

The interface 1303 may include any appropriate hardware or software configured to enable communication with one or more computer devices (for example, the network element in embodiments of this application). For example, in some embodiments, the interface 1303 may include a terminal and/or a pin configured to be coupled with a wire of a wired connection or a wireless interface of a wireless connection. In some embodiments, the interface 1303 may include a transmitter, a receiver, an interface, and/or an antenna. The interface may be configured to enable communication between computer devices (for example, the network elements in embodiments of this application) by using any available protocol (for example, a 3GPP standard protocol).

The program in embodiments of this application is software in a broad sense. The software may be program code, a program, a subprogram, an instruction set, code, a code segment, a software module, an application program, a software application program, or the like. The program may be run in a processor and/or a computer, to perform various functions and/or processes described in embodiments of this application.

The memory 1304 may store necessary data needed when the processor 1302 executes software. The memory 1304 may be implemented by using any suitable storage technology. For example, the memory 1304 may be any available storage medium that can be accessed by a processor and/or a computer. A non-limiting example of the storage medium is: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic storage medium, a magnetic disc storage device, a flash memory, a register, a state memory, a remotely installed memory, a local or remote memory component, or any other medium that can carry or store software, data, or information and can be accessed by a processor/computer.

The memory 1304 and the processor 1302 may be disposed separately, or may be integrated together. The processor 1302 may read information from the memory 1304, and store and/or write the information in the memory. The memory 1304 may be integrated into the processor 1302. The processor 1302 and the memory 1304 may be disposed in an integrated circuit (for example, an application-specific integrated circuit (application-specific integrated circuit, ASIC)). The integrated circuit may be disposed in the network element or another network node in embodiments of this application. In the figure, the memory 1304 is in dashed lines. This further identifies that the memory is optional.

Further, the communication apparatus 1301 may further include a bus system. The processor 1302, the memory 1304, and the interface 1303 may be connected through the bus system.

As shown in FIG. 10, the apparatus 1301 may be a first terminal device, a second terminal device, or a network device, or may be a chip or a circuit, for example, a chip or a circuit that may be disposed in the first terminal device, for another example, a chip or a circuit that may be disposed in the second terminal device, or for still another example, a chip or a circuit that may be disposed in the network device.

When the apparatus 1301 is configured to implement a function of the network device, in a possible implementation, the processor 1302 is configured to obtain first configuration information and second configuration information. The interface 1303 is configured to send the first configuration information to a first terminal device, and send the second configuration information to a second terminal device.

When the apparatus 1301 is configured to implement a function of the network device, in another possible implementation, the processor 1302 is configured to obtain third configuration information and fourth configuration information. The interface 1303 is configured to send the third configuration information to a first terminal device, and send the fourth configuration information to a second terminal device.

When the apparatus 1301 is configured to implement a function of the first terminal device, in a possible implementation, the processor 1302 is configured to, by using the interface 1303, receive first configuration information from a network device, and send uplink data to a second terminal device on a time-frequency domain resource for sending the uplink data by the first terminal device.

When the apparatus 1301 is configured to implement a function of the first terminal device, in a possible implementation, by using the interface 1303, the processor 1302 is configured to receive, from a network device, third configuration information for sending uplink data, and send the uplink data to a second terminal device based on the third configuration information.

When the apparatus 1301 is configured to implement a function of the second terminal device, in a possible implementation, the processor 1302 is configured to, by using the interface 1303, receive second configuration information from a network device, and receive uplink data from a first terminal device on a time-frequency domain resource for receiving downlink data by the second terminal device.

When the apparatus 1301 is configured to implement a function of the second terminal device, in a possible implementation, by using the interface 1303, the processor 1302 is configured to receive, from a network device, fourth configuration information for receiving downlink data, and receive uplink data from a first terminal device based on the fourth configuration information.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing method, **FIG. 11** is a diagram of a structure of a communication apparatus according to an embodiment of this application. As shown in FIG. 11, the apparatus 1401 may include a communication transceiver 1403 and a processor 1402. Further, the apparatus 1401 may include a memory 1404. In the figure, the memory 1404 is in dashed lines. This further identifies that the memory is optional. The communication transceiver 1403 is configured to input and/or output information. The processor 1402 is configured to execute a computer program or instructions, so that the apparatus 1401 implements the method of the first terminal device, the second terminal device, or the network device in the related solution in FIG. 3, FIG. 5, or FIG. 7. In this embodiment of this application, the communication transceiver 1403 may implement the solution implemented by the interface 1303 in FIG. 10, the processor 1402 may implement the solution implemented by the processor 1302 in FIG. 10, and the memory 1404 may implement the solution implemented by the memory 1304 in FIG. 10. Details are not described herein again.

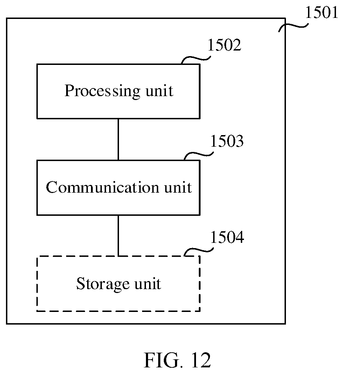

Based on the foregoing embodiments and a same concept, **FIG. 12** is a diagram of a communication apparatus according to an embodiment of this application. As shown in FIG. 12, the apparatus 1501 may be a first terminal device, a second terminal device, or a network device, or may be a chip or a circuit, for example, a chip or a circuit that may be disposed in the first terminal device, for another example, a chip or a circuit that may be disposed in the second terminal device, or for still another example, a chip or a circuit that may be disposed in the network device.

The apparatus 1501 includes a processing unit 1502 and a communication unit 1503. Further, the apparatus 1501 may include a storage unit 1504, or may not include the storage unit 1504. In the figure, the storage unit 1504 is in dashed lines. This further identifies that the memory is optional.

When the apparatus 1501 is configured to implement a function of the network device, in a possible implementation, the processing unit 1502 is configured to obtain first configuration information and second configuration information. The communication unit 1503 is configured to send the first configuration information to a first terminal device, and send the second configuration information to a second terminal device.

When the apparatus 1501 is configured to implement a function of the network device, in another possible implementation, the processing unit 1502 is configured to obtain third configuration information and fourth configuration information. The communication unit 1503 is configured to send the third configuration information to a first terminal device, and send the fourth configuration information to a second terminal device.

When the apparatus 1501 is configured to implement a function of the first terminal device, in a possible implementation, the processing unit 1502 is configured to, by using the communication unit 1503, receive first configuration information from a network device, and send uplink data to a second terminal device on a time-frequency domain resource for sending the uplink data by the first terminal device.

When the apparatus 1501 is configured to implement a function of the first terminal device, in a possible implementation, by using the communication unit 1503, the processing unit 1502 is configured to receive, from a network device, third configuration information for sending uplink data, and send the uplink data to a second terminal device based on the third configuration information.

When the apparatus 1501 is configured to implement a function of the second terminal device, in a possible implementation, the processing unit 1502 is configured to, by using the communication unit 1503, receive second configuration information from a network device, and receive uplink data from a first terminal device on a time-frequency domain resource for receiving downlink data by the second terminal device.

When the apparatus 1501 is configured to implement a function of the second terminal device, in a possible implementation, by using the communication unit 1503, the processing unit 1502 is configured to receive, from a network device, fourth configuration information for receiving downlink data, and receive uplink data from a first terminal device based on the fourth configuration information.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for a function of each unit in the apparatus 1501, refer to implementations of corresponding method embodiments. Details are not described herein again.

It should be understood that the division into the units of the communication apparatus is merely logical function division. During actual implementation, all or some of the units may be integrated into one physical entity, or may be physically separated. In this embodiment of this application, the communication unit 1503 may be implemented by the interface 1303 in FIG. 10, and the processing unit 1502 may be implemented by the processor 1302 in FIG. 10.

According to the methods provided in embodiments of this application, this application further provides a computer program product. The computer program product includes computer program code or instructions. When the computer program code or the instructions are run on a computer, the computer is enabled to perform the method in any one of the embodiments shown in FIG. 3, FIG. 5, or FIG. 7.

According to the methods provided in embodiments of this application, this application further provides a computer-readable storage medium. The computer-readable medium stores program code. When the program code is run on a computer, the computer is enabled to perform the method in any one of the embodiments shown in FIG. 3, FIG. 5, or FIG. 7.

According to the methods provided in embodiments of this application, this application further provides a chip system. The chip system may include a processor. The processor is coupled to a memory, and may be configured to perform the method in any one of the embodiments shown in FIG. 3, FIG. 5, or FIG. 7. Optionally, the chip system further includes the memory. The memory is configured to store a computer program (which may also be referred to as code or instructions). The processor is configured to invoke the computer program from the memory and run the computer program, so that a device in which the chip system is installed performs the method in any one of the embodiments shown in FIG. 3, FIG. 5, or FIG. 7.

According to the methods provided in embodiments of this application, this application further provides a system, including one or more of the foregoing network devices.

In a possible implementation, the system may further include one or more terminal devices, for example, the first terminal device and/or the second terminal device in embodiments of this application.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disc (solid-state disc, SSD)), or the like.

It should be noted that a part of this patent application document includes content protected by copyright. A copyright owner reserves the copyright except copies made for the patent document or the recorded content of the patent document in the China National Intellectual Property Administration.

The network device and the terminal device in the foregoing apparatus embodiments correspond to the network device and the terminal device in the method embodiments. A corresponding module or unit performs a corresponding step. For example, the communication unit (the transceiver) performs a receiving step or a sending step in the method embodiments, and a step other than the sending step and the receiving step may be performed by the processing unit (the processor). For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated by figures, both a computing device and an application that runs on the computing device may be components. One or more components may reside within a process and/or a thread of execution, and a component may be located on one computer and/or distributed on two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, illustrative logical blocks (illustrative logical blocks) and steps (steps) described in combination with embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a network device, first configuration information and second configuration information; and
sending, by the network device, the first configuration information to the first terminal device, and sending the second configuration information to the second terminal device, wherein
the first configuration information comprises information about a time-frequency domain resource for sending uplink data by the first terminal device, and the second configuration information comprises information about a time-frequency domain resource for receiving downlink data by the second terminal device; and
the time-frequency domain resource for sending the uplink data by the first terminal device is the same as the time-frequency domain resource for receiving the downlink data by the second terminal device, and the downlink data received by the second terminal device comprises the uplink data sent by the first terminal device.

2. The method according to claim 1, wherein the method further comprises:
sending, by the network device, the third configuration information to the first terminal device, and sending the fourth configuration information to the second terminal device, wherein
the third configuration information is used by the first terminal device to send the uplink data, the fourth configuration information is used by the second terminal device to receive the downlink data, the third configuration information matches the fourth configuration information, and the downlink data received by the second terminal device comprises the uplink data sent by the first terminal device.

3. A communication method, comprising:
obtaining, by a network device, third configuration information and fourth configuration information; and
sending, by the network device, the third configuration information to the first terminal device, and sending the fourth configuration information to the second terminal device, wherein
the third configuration information is used by the first terminal device to send uplink data, the fourth configuration information is used by the second terminal device to receive downlink data, the third configuration information matches the fourth configuration information, and the downlink data received by the second terminal device comprises the uplink data sent by the first terminal device.

4. The method according to claim 3, wherein the method further comprises:
sending, by the network device, the first configuration information to the first terminal device, and sending the second configuration information to the second terminal device, wherein
the first configuration information comprises information about a time-frequency domain resource for sending the uplink data by the first terminal device, and the second configuration information comprises information about a time-frequency domain resource for receiving the downlink data by the second terminal device; and
the time-frequency domain resource for sending the uplink data by the first terminal device is the same as the time-frequency domain resource for receiving the downlink data by the second terminal device.

5. The method according to any one of claims 1, 2, and 4, wherein the first configuration information comprises information for modulating and encoding the uplink data, and the second configuration information comprises information for demodulating and decoding the downlink data; and
the information for modulating and encoding the uplink data matches the information for demodulating and decoding the downlink data.

6. The method according to any one of claims 2 to 4, wherein the third configuration information comprises information indicating that a cell slot type of the first terminal device is flexible; and
the fourth configuration information comprises information indicating that a cell slot type of the second terminal device is flexible.

7. The method according to any one of claims 2 to 4 and 6, wherein the third configuration information comprises information indicating a first scrambling code sequence, and the first scrambling code sequence is for scrambling the uplink data;
the fourth configuration information comprises information indicating a second scrambling code sequence, and the second scrambling code sequence is for descrambling the downlink data; and
the first scrambling code sequence is the same as the second scrambling code sequence.

8. The method according to any one of claims 2 to 4, 6, and 7, wherein pilot configuration information comprised in the third configuration information is the same as pilot configuration information in the fourth configuration information.

9. The method according to any one of claims 1 to 8, wherein the method further comprises:
sending, by the network device, a first timing advance to the first terminal device, wherein
the first timing advance is used by the first terminal device to perform timing synchronization, and the first timing advance is determined based on a distance between the first terminal device and the second terminal device.

10. The method according to any one of claims 1 to 9, wherein the method further comprises at least one of the following content:
sending, by the network device to the first terminal device, information indicating frequency domain and/or time domain for sending a physical uplink control channel PUCCH by the first terminal device, wherein the frequency domain and/or the time domain for sending the PUCCH by the first terminal device do/does not overlap frequency domain and/or time domain for sending a PUCCH by the second terminal device;
sending, by the network device to the second terminal device, information indicating frequency domain and/or time domain for sending a PUCCH by the second terminal device, wherein frequency domain and/or time domain for sending a PUCCH by the first terminal device do/does not overlap the frequency domain and/or the time domain for sending the PUCCH by the second terminal device;
sending, by the network device to the first terminal device, information indicating frequency domain and/or time domain for receiving a physical downlink control channel PDCCH by the first terminal device, wherein the frequency domain and/or the time domain for receiving the PDCCH by the first terminal device do/does not overlap frequency domain and/or time domain for receiving a PDCCH by the second terminal device; or
sending, by the network device to the second terminal device, information indicating frequency domain and/or time domain for receiving a PDCCH by the second terminal device, wherein frequency domain and/or time domain for receiving a PDCCH by the first terminal device do/does not overlap the frequency domain and/or the time domain for receiving the PDCCH by the second terminal device.

11. The method according to any one of claims 1 to 10, wherein the method further comprises:
receiving, by the network device, the uplink data from the first terminal device;
processing, by the network device, the uplink data to obtain first information;
receiving, by the network device from the second terminal device, information indicating that the first information is not successfully received; and
processing, by the network device, the first information to obtain downlink data, and sending the downlink data to the second terminal device; or sending, by the network device to the first terminal device, information indicating the first terminal device to send the uplink data.

12. A communication method, comprising:
receiving, by the first terminal device, first configuration information from a network device, wherein the first configuration information comprises information about a time-frequency domain resource for sending uplink data by the first terminal device, and the time-frequency domain resource for sending the uplink data by the first terminal device is the same as a time-frequency domain resource for receiving the downlink data by a second terminal device; and
sending, by the first terminal device, the uplink data to the second terminal device on the time-frequency domain resource for sending the uplink data by the first terminal device, wherein the downlink data received by the second terminal device comprises the uplink data sent by the first terminal device.

13. The method according to claim 12, wherein the method further comprises:
receiving, by the first terminal device from the network device, third configuration information for sending the uplink data, wherein the third configuration information matches fourth configuration information used by the second terminal device to receive the downlink data; and
the sending, by the first terminal device, the uplink data to the second terminal device on the time-frequency domain resource for sending the uplink data by the first terminal device comprises:
sending, by the first terminal device based on the third configuration information, the uplink data to the second terminal device on the time-frequency domain resource for sending the uplink data by the first terminal device.

14. A communication method, comprising:
receiving, by the first terminal device from a network device, third configuration information for sending uplink data; and
sending, by the first terminal device, the uplink data to a second terminal device based on the third configuration information, wherein the third configuration information matches fourth configuration information used by the second terminal device to receive downlink data, and the downlink data received by the second terminal device comprises the uplink data sent by the first terminal device.

15. The method according to claim 14, wherein the method further comprises:
receiving, by the first terminal device, first configuration information from the network device, wherein the first configuration information comprises information about a time-frequency domain resource for sending the uplink data by the first terminal device, and the time-frequency domain resource for sending the uplink data by the first terminal device is the same as a time-frequency domain resource for receiving the downlink data by the second terminal device; and
the sending, by the first terminal device, the uplink data to a second terminal device based on the third configuration information comprises:
sending, by the first terminal device based on the third configuration information, the uplink data to the second terminal device on the time-frequency domain resource for sending the uplink data by the first terminal device.

16. The method according to any one of claims 12, 13, and 14, wherein the first configuration information comprises information for modulating and encoding the uplink data; and
the information for modulating and encoding the uplink data matches information for demodulating and decoding the downlink data received by the second terminal device.

17. The method according to any one of claims 13 to 15, wherein the third configuration information comprises information indicating that a cell slot type of the first terminal device is flexible.

18. The method according to any one of claims 13 to 15 and 17, wherein the third configuration information comprises information indicating a first scrambling code sequence, and the first scrambling code sequence is for scrambling the uplink data; and
the first scrambling code sequence is the same as a second scrambling code sequence for descrambling the downlink data.

19. The method according to any one of claims 13 to 15, 17, and 18, wherein pilot configuration information comprised in the third configuration information is the same as pilot configuration information configured by the network device for the second terminal device.

20. The method according to any one of claims 12 to 19, wherein the method further comprises:
receiving, by the first terminal device, a first timing advance from the network device, wherein the first timing advance is determined based on a distance between the first terminal device and the second terminal device; and
performing, by the first terminal device, timing synchronization based on the first timing advance.

21. The method according to any one of claims 12 to 20, wherein the method further comprises:
receiving, by the first terminal device from the network device, information indicating frequency domain and/or time domain for sending a physical uplink control channel PUCCH by the first terminal device, wherein the frequency domain and/or the time domain for sending the PUCCH by the first terminal device do/does not overlap frequency domain and/or time domain for sending a PUCCH by the second terminal device; and/or
receiving, by the first terminal device from the network device, information indicating frequency domain and/or time domain for receiving a physical downlink control channel PDCCH by the first terminal device, wherein the frequency domain and/or the time domain for receiving the PDCCH by the first terminal device do/does not overlap frequency domain and/or time domain for receiving a PDCCH by the second terminal device.

22. A communication method, comprising:
receiving, by the second terminal device, second configuration information from a network device, wherein the second configuration information comprises information about a time-frequency domain resource for receiving downlink data by the second terminal device, and a time-frequency domain resource for sending uplink data by the first terminal device is the same as the time-frequency domain resource for receiving the downlink data by the second terminal device; and
receiving, by the second terminal device, the uplink data from the first terminal device on the time-frequency domain resource for receiving the downlink data by the second terminal device, wherein the downlink data received by the second terminal device comprises the uplink data sent by the first terminal device.

23. The method according to claim 22, wherein the method further comprises:
receiving, by the second terminal device from the network device, fourth configuration information for receiving the downlink data, wherein the fourth configuration information matches third configuration information used by the first terminal device to send the uplink data; and
the receiving, by the second terminal device, the uplink data from the first terminal device on the time-frequency domain resource for receiving the downlink data by the second terminal device comprises:
receiving, by the second terminal device based on the fourth configuration information, the uplink data from the first terminal device on the time-frequency domain resource for receiving the downlink data by the second terminal device.

24. A communication method, comprising:
receiving, by the second terminal device from a network device, fourth configuration information for receiving downlink data; and
receiving, by the second terminal device, uplink data from a first terminal device based on the fourth configuration information, wherein the fourth configuration information matches third configuration information used by the first terminal device to send the uplink data, and the downlink data received by the second terminal device comprises the uplink data sent by the first terminal device.

25. The method according to claim 24, wherein the method further comprises:
receiving, by the second terminal device, second configuration information from the network device, wherein the second configuration information comprises information about a time-frequency domain resource for receiving the downlink data by the second terminal device, and a time-frequency domain resource for sending the uplink data by the first terminal device is the same as the time-frequency domain resource for receiving the downlink data by the second terminal device; and
the receiving, by the second terminal device, uplink data from a first terminal device based on the fourth configuration information comprises:
receiving, by the second terminal device based on the fourth configuration information, the uplink data from the first terminal device on the time-frequency domain resource for receiving the downlink data by the second terminal device.

26. The method according to any one of claims 22, 23, and 25, wherein the second configuration information comprises information for demodulating and decoding the downlink data; and
information for modulating and encoding the uplink data sent by the first terminal device matches the information for demodulating and decoding the downlink data.

27. The method according to any one of claims 23 to 25, wherein the fourth configuration information comprises information indicating that a cell slot type of the second terminal device is flexible.

28. The method according to any one of claims 23 to 25 and 27, wherein the fourth configuration information comprises information indicating a second scrambling code sequence, and the second scrambling code sequence is for descrambling the downlink data; and
a first scrambling code sequence for scrambling the uplink data is the same as the second scrambling code sequence.

29. The method according to any one of claims 23 to 25, 27, and 28, wherein pilot configuration information in the fourth configuration information is the same as pilot configuration information configured by the network device for the first terminal device.

30. The method according to any one of claims 22 to 29, wherein the method further comprises:
receiving, by the second terminal device from the network device, information indicating frequency domain and/or time domain for sending a physical uplink control channel PUCCH by the second terminal device, wherein frequency domain and/or time domain for sending a PUCCH by the first terminal device do/does not overlap the frequency domain and/or the time domain for sending the PUCCH by the second terminal device; and/or
receiving, by the second terminal device from the network device, information indicating frequency domain and/or time domain for receiving a physical downlink control channel PDCCH by the second terminal device, wherein frequency domain and/or time domain for receiving a PDCCH by the first terminal device do/does not overlap the frequency domain and/or the time domain for receiving the PDCCH by the second terminal device.

31. The method according to any one of claims 22 to 30, wherein after the receiving, by the second terminal device, uplink data from a first terminal device based on the fourth configuration information, the method further comprises:
processing, by the second terminal device, the uplink data based on the fourth configuration information; and
when not successfully obtaining first information in the uplink data, sending, by the second terminal device to the network device, information indicating that the first information is not successfully received.

32. A communication apparatus, comprising a communication interface and at least one processor, wherein the communication interface and the at least one processor are interconnected through a line, wherein
the communication interface is configured to input and/or output signaling or data; and
the processor is configured to execute a computer-executable program, to enable the method according to any one of claims 1 to 31 to be performed.

33. A communication apparatus, comprising a processor and a memory, wherein
the memory is configured to store a computer program or instructions; and
the processor is configured to execute the computer program or the instructions in the memory, to enable the method according to any one of claims 1 to 31 to be performed.

34. A communication apparatus, comprising a processing unit and a communication unit, wherein the processing unit is configured to perform the method according to any one of claims 1 to 31 by using the communication unit.

35. A computer-readable storage medium, wherein the computer-readable storage medium stores computer-executable instructions; and when the computer-executable instructions are invoked by a computer, the method according to any one of claims 1 to 31 is performed.

36. A chip system, wherein the chip system comprises at least one processor and an interface circuit, the interface circuit and the at least one processor are interconnected through a line, and the processor runs instructions to perform the method according to any one of claims 1 to 31.

37. A computer program product, comprising instructions, wherein when the instructions are run on a computer, the method according to any one of claims 1 to 31 is performed.
